(19) Europäisches Patentamt
European Patent Office
Office européen des brevets

(11) EP 4 293 069 A1

(12) EUROPEAN PATENT APPLICATION
published in accordance with Art. 153(4) EPC

(43) Date of publication:
**20.12.2023 Bulletin 2023/51**

(21) Application number: **22752659.7**

(22) Date of filing: **03.02.2022**

(51) International Patent Classification (IPC):
***C08J 5/18*** (2006.01) ***B82Y 30/00*** (2011.01)
***C08B 11/02*** (2006.01) ***D21H 11/18*** (2006.01)

(52) Cooperative Patent Classification (CPC):
**B82Y 30/00; C08B 11/02; C08J 5/18; D21H 11/18**

(86) International application number:
**PCT/JP2022/004145**

(87) International publication number:
**WO 2022/172832 (18.08.2022 Gazette 2022/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2021 JP 2021021181**

(71) Applicant: **Oji Holdings Corporation**
**Chuo-ku**
**Tokyo 104-0061 (JP)**

(72) Inventors:
- **SHISHIDO, Rina**
  **Tokyo 104-0061 (JP)**
- **NOGUCHI, Yuichi**
  **Tokyo 104-0061 (JP)**
- **SUNAGAWA, Hirokazu**
  **Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

# (54) SHEET AND LAYERED BODY

(57) Provided are: a sheet which has high transparency, in which yellowing due to heating is suppressed, and which has high tensile elastic modulus and excellent flexibility; and a layered body having the sheet. The sheet of the present invention contains ultrafine fibrous cellulose having a fiber width of 10 nm or less, and a cellulose derivative having a weight-average molecular weight of $1.0 \times 10^4$ or more and $3.0 \times 10^5$ or less.

EP 4 293 069 A1

## Description

### Technical Field

The present invention relates to a sheet and a layered body having the sheet.

### Background Art

In recent years, materials using renewable natural fibers have been attracting attention due to the substitution of petroleum resources and an increase in environmental awareness. Among natural fibers, fibrous cellulose having a fiber diameter of 10 μm or more and 50 μm or less, particularly fibrous cellulose derived from wood (pulp), has been widely used mainly as paper products.

As the fibrous cellulose, ultrafine fibrous cellulose having a fiber diameter of 1 μm or less is also known. In addition, a sheet composed of such ultrafine fibrous cellulose or a sheet containing ultrafine fibrous cellulose and a resin has been developed. In these sheets, it is known that the tensile strength and the like are greatly improved since the number of contact points between fibers is significantly increased.

For example, PTLs 1 to 4 disclose a sheet containing ultrafine fibrous cellulose and a resin. PTL 1 describes a sheet containing fibrous cellulose having an anionic functional group and a fiber width of 1000 nm or less, in which the sheet has a YI increase rate of 1500% or less.

PTL 2 describes a cellulose fiber composite containing cellulose fibers having a number-average fiber diameter of 4 to 100 nm and a matrix, and having a haze of 2 or less and a YI value of 25 or less after repeating heat treatment four times at 190°C for 4 hours.

In addition, PTL 3 describes a modified cellulose fiber-composite polyvinyl alcohol film containing a polyvinyl alcohol-based resin and modified cellulose fibers.

Furthermore, PTL 4 discloses a resin composition containing one or more resins selected from the group consisting of a thermoplastic resin and a curable resin selected from an epoxy resin, a (meth)acrylic resin, a phenol resin, an unsaturated polyester resin, a polyurethane resin, and a polyimide resin, and modified cellulose fibers.

### Citation List

### Patent Literature

PTL 1: JP 2019-108488 A
PTL 2: JP 2011-144363 A
PTL 3 : JP 2017-052840 A
PTL 4: JP 2017-052940 A

### Summary of Invention

### Technical Problem

When a sheet containing ultrafine fibrous cellulose is heated, yellowing due to heating may occur, and various attempts have been made for the purpose of suppressing yellowing as in PTLs 1 and 2.

In addition, the sheets containing ultrafine fibrous cellulose described in PTLs 1 to 4 have high rigidity and high tensile elastic modulus, but have low flexibility and poor formability.

An object of the present invention is to provide a sheet which has high transparency, in which yellowing due to heating is suppressed, and which has high tensile elastic modulus and excellent flexibility, and a layered body having the sheet.

### Solution to Problem

The present inventors have found that the above-described problem can be solved by a sheet containing ultrafine fibrous cellulose and a specific cellulose derivative.

The present invention relates to the following <1> to <20>.

<1> A sheet containing: ultrafine fibrous cellulose having a fiber width of 10 nm or less; and a cellulose derivative

having a weight-average molecular weight of $1.0 \times 10^4$ or more and $3.0 \times 10^5$ or less.

<2> The sheet according to <1>, in which the ultrafine fibrous cellulose has an anionic group.

<3> The sheet according to <1> or <2>, in which the ultrafine fibrous cellulose has a phosphorus oxo acid group or a group derived from a phosphorus oxo acid group.

<4> The sheet according to any one of <1> to <3>, in which an amount of an anionic group in the ultrafine fibrous cellulose is less than 0.50 mmol/g.

<5> The sheet according to <2> or <3>, in which an amount of an anionic group in the ultrafine fibrous cellulose is 0.80 mmol/g or more.

<6> The sheet according to <1>, in which the ultrafine fibrous cellulose contains a carbamide group.

<7> The sheet according to any one of <1> to <6>, in which the cellulose derivative is a water-soluble cellulose ether.

<8> The sheet according to <7>, in which the water-soluble cellulose ether is non-ionic.

<9> The sheet according to <7> or <8>, in which the water-soluble cellulose ether has at least one functional group selected from the group consisting of a methoxy group and a hydroxypropoxy group.

<10> The sheet according to any one of <7> to <9>, in which the water-soluble cellulose ether is selected from the group consisting of methyl cellulose and hydroxypropylmethyl cellulose.

<11> The sheet according to any one of <1> to <10>, in which a total content of the ultrafine fibrous cellulose and the cellulose derivative is 90% by mass or more of a solid content of the sheet.

<12> The sheet according to any one of <1> to <1 1>, in which a content of the ultrafine fibrous cellulose is 50% by mass or more of a solid content of the sheet.

<13> The sheet according to any one of <1> to <12>, in which a change in a yellow index (YI value) before and after heating the sheet at 160°C for 6 hours is 1.5 or less.

<14> The sheet according to any one of <1> to <13>, in which the sheet has a haze of 5% or less.

<15> The sheet according to any one of <1> to <14>, in which the sheet has a total luminous transmittance of 90% or more.

<16> The sheet according to any one of <1> to <15>, in which a tensile elastic modulus of the sheet is 6.5 GPa or more.

<17> The sheet according to any one of <1> to <16>, in which a tensile elongation of the sheet is 3% or more.

<18> A layered body including: the sheet according to any one of <1> to <17>; and a resin layer on at least one surface of the sheet.

<19> The sheet according to any one of <1> to <17>, which is used for an optical member.

<20> The sheet according to any one of <1> to <17>, which is used for a foodstuff container, a cutlery, or a straw.

Advantageous Effects of Invention

According to the present invention, it is possible to provide a sheet which has high transparency, in which yellowing due to heating is suppressed, and which has high tensile elastic modulus and excellent flexibility, and a layered body having the sheet.

Brief Description of Drawings

Fig. 1 is a graph illustrating the relationship between the pH and the amount of NaOH added dropwise to an ultrafine fibrous cellulose-containing slurry having a phosphorus oxo acid group;

Fig. 2 is a graph illustrating the relationship between the pH and the amount of NaOH added dropwise to an ultrafine fibrous cellulose-containing slurry having a carboxy group; and

Fig. 3 is a schematic view showing a method for evaluating the formability of a sheet.

Description of Embodiments

[Sheet]

The sheet of the present invention contains ultrafine fibrous cellulose having a fiber width of 10 nm or less (hereinafter, also simply referred to as "ultrafine fibrous cellulose") and a cellulose derivative having a weight-average molecular weight of $1.0 \times 10^4$ or more and $3.0 \times 10^5$ or less. According to the present invention, a sheet which has high transparency, in which yellowing due to heating is suppressed, and which has high tensile elastic modulus and excellent flexibility is provided.

Ultrafine fibrous cellulose is a fiber obtained by defibrating cellulose to a nano-level having a fiber width of 10 nm or less, and a sheet containing the ultrafine fibrous cellulose has high transparency and is used for various applications

requiring transparency. On the other hand, a sheet made of the ultrafine fibrous cellulose which is generally obtained has a problem in that the sheet is yellowed by heating. Further, a sheet containing the ultrafine fibrous cellulose has a problem in that the sheet has low flexibility although being excellent in stiffness and having high tensile elastic modulus.

In the related art, an attempt to solve the above-described problems has been made by modifying the ultrafine fibrous cellulose or including other components, but all of the above-described problems have not been able to be solved.

As a result of intensive studies, the present inventors have found that when ultrafine fibrous cellulose and a cellulose derivative having a specific weight-average molecular weight are contained, yellowing during heating is suppressed as compared with the related art, and flexibility is excellent while rigidity is maintained.

The reason why the above-described effect is obtained is not clear, but it is presumed that high affinity between the ultrafine fibrous cellulose and the cellulose derivative and a small amount of functional groups which cause yellowing in the cellulose derivative contribute to the above-described effect.

Hereinafter, the present invention will be described in more detail.

<Ultrafine Fibrous Cellulose>

The sheet of the present invention contains ultrafine fibrous cellulose.

The ultrafine fibrous cellulose is fibrous cellulose having a fiber width of 10 nm or less. The fiber width of the fibrous cellulose can be measured by, for example, observation with an electron microscope.

The fiber width of the ultrafine fibrous cellulose is 10 nm or less. The fiber width of the ultrafine fibrous cellulose is, for example, 1 nm or more, and preferably 2 nm or more, and is 10 nm or less, preferably 8 nm or less, more preferably 6 nm or less, and still more preferably 5 nm or less, from the viewpoint of suppressing the dissolution as a cellulose molecule in water and more easily exhibiting the effect of improving the strength, the rigidity, and the dimensional stability due to the ultrafine fibrous cellulose.

The average fiber width of the ultrafine fibrous cellulose is preferably 2 nm or more and 10 nm or less, and more preferably 2 nm or more and 5 nm or less. By setting the average fiber width of the ultrafine fibrous cellulose to 2 nm or more, it is possible to suppress the dissolution as a cellulose molecule in water and to more easily express the effect of improving the strength, the rigidity, and the dimensional stability due to the ultrafine fibrous cellulose. The ultrafine fibrous cellulose is, for example, cellulose in the form of a single fiber.

The average fiber width of the ultrafine fibrous cellulose is measured by using, for example, an electron microscope in the following manner. First, an aqueous suspension of fibrous cellulose with a concentration of 0.05% by mass or more and 0.1% by mass or less is prepared, and the suspension is cast on a hydrophilized carbon film-coated grid to obtain a sample for TEM observation. When fibers with a wide width are included, an SEM image of the surface cast on glass may be observed. Then, observation is performed through an electron microscope image at any of magnifications of $\times$ 1,000, $\times$5,000, $\times$10,000 and $\times$50,000 according to the width of fibers to be observed. However, the sample, the observation conditions, and the magnification are adjusted to satisfy the following conditions.

(1) One straight line X is drawn at an arbitrary position within an observation image, and 20 or more fibers intersect the corresponding straight line X.
(2) A straight line Y perpendicularly intersecting the corresponding straight line is drawn within the same image, and 20 or more fibers intersect the corresponding straight line Y

In regard to the observation images satisfying the above-mentioned conditions, widths of fibers intersecting the straight lines X or the straight lines Y are visually read. In this manner, three or more sets of observation images on at least surface portions that do not overlap each other are obtained. Next, for each image, widths of fibers intersecting the straight line X or the straight line Y are read. Accordingly, at least 120 (= 20 $\times$ 2 $\times$ 3) fiber widths are read. Then, the average value of the read fiber widths is set as an average fiber width of the fibrous cellulose.

The fiber length of the ultrafine fibrous cellulose is not particularly limited, but is preferably, for example, 0.1 $\mu$m or more and 1,000 $\mu$m or less, more preferably 0.1 $\mu$m or more and 800 $\mu$m or less, and still more preferably 0.1 $\mu$m or more and 600 $\mu$m or less. When the fiber length is set within the range, destruction of a crystal region of the ultrafine fibrous cellulose may be suppressed. In addition, it is also possible to set the slurry viscosity of the ultrafine fibrous cellulose within an appropriate range. The fiber length of the ultrafine fibrous cellulose may be obtained through, for example, image analysis by TEM, SEM, or AFM.

It is preferable that the ultrafine fibrous cellulose has an I-type crystal structure. Here, the fact that the ultrafine fibrous cellulose has the I-type crystal structure may be identified in a diffraction profile obtained from a wide-angle X-ray diffraction photograph using CuK$\alpha$ ($\lambda$ = 1.5418 Å) monochromatized with graphite. Specifically, identification may be made from typical peaks present at two positions around 2$\theta$ = 14° or more and 17° or less and around 2$\theta$ = 22° or more and 23° or less.

The occupying ratio of the I-type crystal structure in the ultrafine fibrous cellulose is preferably, for example,

30% or more, more preferably 40% or more, and still more preferably 50% or more. Thereby, further excellent performance can be expected in terms of heat resistance and expression of a low linear thermal expansion coefficient. The degree of crystallinity may be obtained from a pattern in measurement of an X-ray diffraction profile, through a general method (Seagal et al, Textile Research Journal, vol. 29, page 786, 1959).

The axial ratio (fiber length/fiber width) of the ultrafine fibrous cellulose is not particularly limited, but is preferably, for example, 20 or more and 10,000 or less, and more preferably 50 or more and 1,000 or less. When the axial ratio is set to be the lower limit value or more as described above, it is easy to form a sheet containing the ultrafine fibrous cellulose. In addition, when a solvent dispersion is prepared, sufficient thickening properties are easily obtained. Setting the axial ratio to the upper limit value or less as described above is preferable because, for example, handling such as dilution becomes easy when the ultrafine fibrous cellulose is treated as an aqueous dispersion liquid.

The ultrafine fibrous cellulose in the present embodiment preferably has, for example, at least one of an ionic group and a non-ionic group. The ultrafine fibrous cellulose more preferably has an ionic group from the viewpoint of improving the dispersibility of the fibers in the dispersion medium and increasing the defibration efficiency in a defibration treatment. The ionic group may include, for example, either one or both of an anionic group and a cationic group. In addition, the non-ionic group may include, for example, an alkyl group and an acyl group. In the present embodiment, it is particularly preferable to have the anionic group as the ionic group. It is preferable to have an ionic group, preferably an anionic group, at least during the defibration treatment, and the ionic group may be removed after the defibration treatment.

In addition, the treatment for introducing an ionic group may not be performed on the ultrafine fibrous cellulose.

Examples of the anionic group as the ionic group include a phosphorus oxo acid group or a substituent derived from a phosphorus oxo acid group (sometimes simply referred to as a phosphorus oxo acid group), a carboxy group or a substituent derived from a carboxy group (sometimes simply referred to as a carboxy group), a sulfur oxo acid group or a substituent derived from a sulfur oxo acid group (sometimes simply referred to as a sulfur oxo acid group), a xanthate group, a phosphonic group, a phosphine group, a sulfone group, and a carboxyalkyl group. Among these, the anionic group is preferably at least one selected from the group consisting of a phosphorus oxo acid group, a substituent derived from a phosphorus oxo acid group, a carboxy group, a sulfur oxo acid group, a substituent derived from a sulfur oxo acid group, a carboxymethyl group, a carboxyethyl group, and a sulfone group, more preferably at least one selected from the group consisting of a phosphorus oxo acid group, a substituent derived from a phosphorus oxo acid group, a carboxy group, a sulfur oxo acid group, and a substituent derived from a sulfur oxo acid group, and particularly preferably a phosphorus oxo acid group. By introducing a phosphorus oxo acid group as the anionic group, for example, the dispersibility of the fibrous cellulose can be further enhanced even under an alkaline condition or an acidic condition, and as a result, a sheet having high strength and high transparency is easily obtained.

Examples of the cationic group as the ionic group include an ammonium group, a phosphonium group, and a sulfonium group. Among them, the cationic group is preferably an ammonium group.

The phosphorus oxo acid group or the substituent derived from the phosphorus oxo acid group is, for example, a substituent represented by the following formula (1). A plurality of substituents represented by the following formula (1) may be introduced into each fibrous cellulose. In this case, the plurality of substituents represented by the following formula (1) to be introduced may be the same or different.

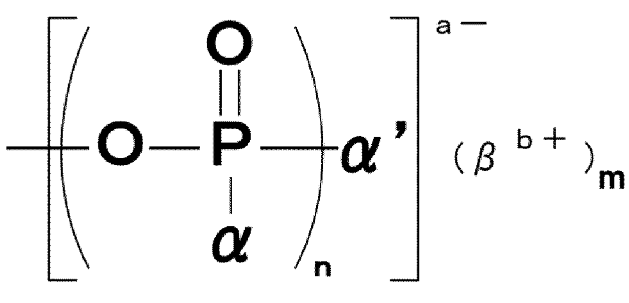
(1)

In the formula (1), a, b, and n are natural numbers, and m is an arbitrary number (provided that a = b × m). At least one of the nα's and α' is $O^-$, and the remainder is R or OR. All of α and α' may be $O^-$. The nα's may be the same or different from each other. $\beta^{b+}$ is a monovalent or higher cation composed of an organic substance or an inorganic substance.

Each R is a hydrogen atom, a saturated-linear hydrocarbon group, a saturated-branched hydrocarbon group, a saturated-cyclic hydrocarbon group, an unsaturated-linear hydrocarbon group, an unsaturated-branched hydrocarbon group, an unsaturated-cyclic hydrocarbon group, an aromatic group, or groups derived therefrom. In the formula (1), n is preferably 1.

Examples of the saturated-linear hydrocarbon group include a methyl group, an ethyl group, a n-propyl group,

and a n-butyl group, but are not particularly limited. Examples of the saturated-branched hydrocarbon group include an i-propyl group and a t-butyl group, but are not particularly limited. Examples of the saturated-cyclic hydrocarbon group include a cyclopentyl group and a cyclohexyl group, but are not particularly limited. Examples of the unsaturated-linear hydrocarbon group include a vinyl group and an allyl group, but are not particularly limited. Examples of the unsaturated-branched hydrocarbon group include an i-propenyl group and a 3-butenyl group, but are not particularly limited. Examples of the unsaturated-cyclic hydrocarbon group include a cyclopentenyl group and a cyclohexenyl group, but are not particularly limited. Examples of the aromatic group include a phenyl group and a naphthyl group, but are not particularly limited.

In addition, examples of the derived group in R include a functional group in a state in which at least one functional group selected from functional groups such as a carboxy group, a carboxylate group (-COO-), a hydroxy group, an amino group, and an ammonium group is added to or substituted with the main chain or the side chain of the above-mentioned various hydrocarbon groups, but are not particularly limited. In addition, the number of carbon atoms constituting the main chain of R is not particularly limited, but is preferably 20 or less, and more preferably 10 or less. When the number of carbon atoms constituting the main chain of R is set within the range, the molecular weight of the phosphorus oxo acid group may be set within an appropriate range, so that penetration into a fiber raw material may be facilitated, and the yield of ultrafine cellulose fibers may be increased. When a plurality of R's are present in the formula (1) or when a plurality of substituents represented by the formula (1) are introduced into the fibrous cellulose, the plurality of R's may be the same or different.

$\beta^{b+}$ is a monovalent or higher cation composed of an organic substance or an inorganic substance. Examples of the monovalent or higher cation composed of an organic substance include an organic onium ion. Examples of the organic onium ion include an organic ammonium ion and an organic phosphonium ion. Examples of the organic ammonium ion include an aliphatic ammonium ion and an aromatic ammonium ion, and examples of the organic phosphonium ion include an aliphatic phosphonium ion and an aromatic phosphonium ion. Examples of the monovalent or higher cation composed of an inorganic substance include an ion of an alkali metal such as sodium, potassium, or lithium, an ion of a divalent metal such as calcium or magnesium, a hydrogen ion, and an ammonium ion. When a plurality of $\beta^{b+}$'s are present in the formula (1) or a plurality of substituents represented by the formula (1) are introduced into the fibrous cellulose, the plurality of $\beta^{b+}$'s may be the same or different. The monovalent or higher cation composed of the organic substance or the inorganic substance is preferably an ion of sodium or potassium which is hardly yellowed when the fiber raw material containing $\beta^{b+}$ is heated, and is easily industrially used, but is not particularly limited.

More specific examples of the phosphorus oxo acid group or the substituent derived from the phosphorus oxo acid group include a phosphoric acid group ($-PO_3H_2$), a salt of a phosphoric acid group, a phosphorous acid group (phosphonic acid group) ($-PO_2H_2$), and a salt of a phosphorous acid group (phosphonic acid group). In addition, the phosphorus oxo acid group or the substituent derived from the phosphorus oxo acid group may be a group in which phosphoric acid groups are condensed (for example, a pyrophosphoric acid group), a group in which phosphonic acids are condensed (for example, a polyphosphonic acid group), a phosphate ester group (for example, a monomethylphosphoric acid group or a polyoxyethylene alkylphosphoric acid group), an alkylphosphonic acid group (for example, a methylphosphonic acid group), or the like.

The sulfur oxo acid group (the sulfur oxo acid group or the substituent derived from the sulfur oxo acid group) is, for example, a substituent represented by the following formula (2). A plurality of substituents represented by the following formula (2) may be introduced into each fibrous cellulose. In this case, the plurality of substituents represented by the following formula (2) to be introduced may be the same or different.

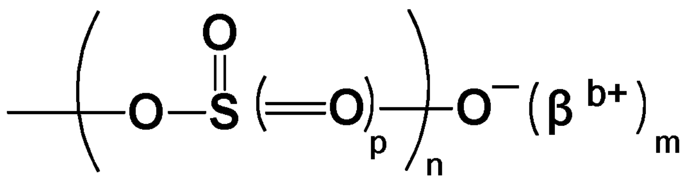

(2)

In the above structural formula, b and n are natural numbers, p is 0 or 1, and m is an arbitrary number (provided that 1 = b × m). When n is 2 or more, a plurality of p's may be the same number or different numbers. In the above structural formula, $\beta^{b+}$ is a monovalent or higher cation composed of an organic substance or an inorganic substance. Examples of the monovalent or higher cation composed of an organic substance include an organic onium ion. Examples of the organic onium ion include an organic ammonium ion and an organic phosphonium ion. Examples of the organic ammonium ion include an aliphatic ammonium ion and an aromatic ammonium ion, and examples of the organic phosphonium ion include an aliphatic phosphonium ion and an aromatic phosphonium ion. Examples of the monovalent or higher cation composed of an inorganic substance include an ion of an alkali metal such as sodium, potassium, or lithium, an ion of a divalent metal such as calcium or magnesium, a hydrogen ion, and an ammonium ion. When a plurality of

substituents represented by the formula (2) are introduced into the fibrous cellulose, the plurality of $\beta^{b+}$'s may be the same or different. The monovalent or higher cation composed of the organic substance or the inorganic substance is preferably an ion of sodium or potassium which is hardly yellowed when the fiber raw material containing $\beta^{b+}$ is heated, and is easily industrially used, but is not particularly limited.

The amount of the ionic group introduced into the fibrous cellulose is, for example, preferably 0.10 mmol/g or more, more preferably 0.20 mmol/g or more, still more preferably 0.50 mmol/g or more, even more preferably 0.80 mmol/g or more, and particularly preferably 1.00 mmol/g or more per 1 g (mass) of the fibrous cellulose. On the other hand, the amount of the ionic group introduced into the fibrous cellulose is, for example, preferably 5.20 mmol/g or less, more preferably 3.65 mmol/g or less, still more preferably 3.50 mmol/g or less, and even more preferably 3.00 mmol/g or less per 1 g (mass) of the fibrous cellulose. When the introduction amount of the ionic group is set within the range, it is possible to facilitate the micronizing of the fiber raw material, and to increase the stability of the ultrafine fibrous cellulose. In addition, when the introduction amount of the ionic group is set within the above range, good characteristics can be exhibited in various applications such as ultrafine fibrous cellulose thickeners.

Here, the denominator in the unit mmol/g indicates the mass of the fibrous cellulose when the counter ion of the ionic group is a hydrogen ion ($H^+$).

The ionic group introduced into the fibrous cellulose may remain in the ultrafine fibrous cellulose as it is, or may be removed after the fibrous cellulose is formed into the ultrafine fibrous cellulose as described later. From the viewpoint of suppressing yellowing of the sheet due to heating, the ionic group is preferably removed.

The amount of the ionic group introduced into the fibrous cellulose can be measured by using, for example, a neutralization titration method. In the measurement by the neutralization titration method, the introduction amount is measured by determining a change in pH while adding an alkali such as a sodium hydroxide aqueous solution to the obtained slurry containing fibrous cellulose.

Fig. 1 is a graph illustrating the relationship between the pH and the amount of NaOH added dropwise to fibrous cellulose having a phosphorus oxo acid group.

Fig. 1 is a graph illustrating the relationship between the pH and the amount of NaOH added dropwise to a fibrous cellulose-containing slurry having a phosphorus oxo acid group. The amount of the phosphorus oxo acid group introduced into the fibrous cellulose is measured, for example, as follows.

First, a slurry containing fibrous cellulose is treated with a strongly acidic ion exchange resin. If necessary, before the treatment with the strongly acidic ion exchange resin, a defibration treatment similar to the defibration treatment step to be described later may be performed on a measurement target.

Next, the change in pH is observed while a sodium hydroxide aqueous solution is added, so that a titration curve illustrated in the upper part of Fig. 1 is obtained. On the titration curve illustrated in the upper part of Fig. 1, a measured pH is plotted relative to the addition amount of alkali, and on a titration curve illustrated in the lower part of Fig. 1, a pH increment (differential value) (1/mmol) is plotted relative to the addition amount of alkali. In this neutralization titration, on the curve with the measured pH plotted relative to the addition amount of alkali, two points at which the increment (a differential value of pH relative to a dropping amount of alkali) is maximized are confirmed. Between these, a firstly obtained maximum point of the increment when addition of alkali is initiated is called a first end point, and a secondly obtained maximum point of the increment is called a second end point. The amount of required alkali from the start of titration to the first end point is equal to a first dissociated acid amount of the fibrous cellulose contained in the slurry used for the titration, the amount of required alkali from the first end point to the second end point is equal to a second dissociated acid amount of the fibrous cellulose contained in the slurry used for the titration, and the amount of required alkali from the start of titration to the second end point is equal to the total dissociated acid amount of the fibrous cellulose contained in the slurry used for the titration. Then, a value obtained by dividing the amount of required alkali from the start of titration to the first end point by the solid content (g) in the slurry as a titration target becomes an introduction amount of phosphorus oxo acid groups (mmol/g). Simple expression as the introduction amount of phosphorus oxo acid groups (or the amount of the phosphorus oxo acid groups) means the first dissociated acid amount.

In Fig. 1, a region from the start of titration to the first end point is called a first region, and a region from the first end point to the second end point is called a second region. For example, when the phosphorus oxo acid group is a phosphoric acid group, and the phosphoric acid group causes condensation, apparently, the amount of weak acid groups (also referred to as a second dissociated acid amount in this specification) in the phosphorus oxo acid group is decreased, and the amount of alkali required for the second region is smaller than the amount of alkali required for the first region. Meanwhile, the amount of strong acid groups (also referred to as a first dissociated acid amount in this specification) in the phosphorus oxo acid group is the same as the amount of phosphorus atoms regardless of the presence/absence of condensation. In addition, when the phosphorus oxo acid group is a phosphorous acid group, since there is no weak acid group in the phosphorus oxo acid group, the amount of alkali required for the second region may be decreased or the amount of alkali required for the second region may be zero in some cases. In this case, on the titration curve, there is one point at which a pH increment is maximized.

Since the denominator indicates the mass of the acid type fibrous cellulose, the above-described introduction

amount of phosphorus oxo acid groups (mmol/g) indicates the amount of phosphorus oxo acid groups included in the acid type fibrous cellulose (hereinafter, referred to as the amount of phosphorus oxo acid groups (acid type)). Meanwhile, when the counter ion of the phosphorus oxo acid group is replaced with an arbitrary cation C so as to have a charge equivalent, the denominator may be converted into the mass of fibrous cellulose in which the corresponding cation C is a counter ion so that it is possible to obtain the amount of phosphorus oxo acid groups included in the fibrous cellulose in which the cation C is a counter ion (hereinafter, the amount of phosphorus oxo acid groups (C type)).

That is, calculation is performed by the following calculation formula.

$$\text{Amount of phosphorus oxo acid groups (C type)} = \{\text{amount of phosphorus oxo acid groups (acid type)}\}/\{1 + (W - 1) \times A/1000\}$$

A [mmol/g]: the total amount of anions derived from phosphorus oxo acid groups included in fibrous cellulose (the sum of the amount of strong acid groups and the amount of weak acid groups in the phosphorus oxo acid groups)
W: formula weight of cation C per valence (for example, Na is 23, and Al is 9)

Fig. 2 is a graph illustrating the relationship between the pH and the amount of NaOH added dropwise to fibrous cellulose having a carboxy group.

The amount of the carboxy group introduced into the fibrous cellulose is measured, for example, as follows.

First, a slurry containing fibrous cellulose is treated with a strongly acidic ion exchange resin. If necessary, before the treatment with the strongly acidic ion exchange resin, a defibration treatment similar to the defibration treatment step to be described later may be performed on a measurement target. Next, the change in pH is observed while a sodium hydroxide aqueous solution is added, so that a titration curve illustrated in Fig. 2 is obtained. If necessary, a defibration treatment similar to the defibration treatment step to be described later may be performed on a measurement target.

As illustrated in Fig. 2, in this neutralization titration, on the curve with the measured pH plotted relative to the addition amount of alkali, one point at which the increment (a differential value of pH relative to a dropping amount of alkali) is maximized is observed. This maximum point of the increment is called a first end point. Here, in Fig. 2, a region from the start of titration to the first end point is called a first region. The amount of alkali required for the first region is equal to the amount of the carboxy groups in the slurry used for titration. Then, an introduction amount of carboxy groups (mmol/g) was calculated by dividing the amount (mmol) of alkali required for the first region on the titration curve by the solid content (g) in the ultrafine fibrous cellulose-containing slurry as a titration target.

The above-described introduction amount of carboxy groups (mmol/g) indicates the amount of substituents (hereinafter, referred to as the amount of carboxy groups (acid type)) per 1 g of the mass of the fibrous cellulose when the counter ion of the carboxy group is a hydrogen ion ($H^+$).

The above-described introduction amount of carboxy groups (mmol/g) indicates the amount of carboxy groups included in acid-type fibrous cellulose (hereinafter, referred to as the amount of carboxy groups (acid type)) because the denominator is the mass of the acid-type fibrous cellulose. Meanwhile, when the counter ion of the carboxy group is replaced with an arbitrary cation C so as to have a charge equivalent, the denominator may be converted into the mass of fibrous cellulose in which the corresponding cation C is a counter ion so that it is possible to obtain the amount of carboxy groups (mmol/g) included in the fibrous cellulose in which the cation C is a counter ion (hereinafter, the amount of carboxy groups (C type)).

That is, calculation is performed by the following calculation formula.

$$\text{Amount of carboxy groups (C type)} = \{\text{amount of carboxy groups (acid type)}\}/\{1 + (W - 1) \times (\text{amount of carboxy groups (acid type)})/1{,}000\}$$

W: formula weight of cation C per valence (for example, Na is 23, and Al is 9)

In addition, the amount of sulfur oxo acid groups and sulfone groups introduced into the ultrafine fibrous cellulose is measured by wet ashing the obtained fibrous cellulose using perchloric acid and concentrated nitric acid, diluting the wet ash at an appropriate magnification, and analyzing the amount of sulfur by ICP emission spectrometry.

The value obtained by dividing the amount of sulfur by the absolute dry mass of the tested fibrous cellulose is defined as the amount of sulfur oxo acid groups and the amount of sulfonic acid groups (unit: mmol/g).

In the measurement of the amount of substituent groups through the titration method, if the dropping amount of one drop of the sodium hydroxide aqueous solution is too large, or if the titration interval is too short, the amount of

substituent groups may be smaller than originally intended, that is, an accurate value may not be obtained. For an appropriate dropping amount, and a titration interval, for example, it is desirable to titrate 10 to 57 μL of a 0.1 N sodium hydroxide aqueous solution in 5 to 30 seconds. In addition, in order to eliminate the influence of carbon dioxide dissolved in the fibrous cellulose-containing slurry, for example, it is desirable to perform measurement while blowing inert gas such as nitrogen gas to the slurry from 15 minutes before the start of titration to the end of titration.

The measurement of the amount of ionic groups by the above-described method is applied to an ultrafine fibrous cellulose having a fiber width of 1,000 nm or less, and in a case where the amount of ionic groups of pulp fibers having a fiber width of more than 1,000 nm is measured, the amount of ionic groups is measured after the pulp fibers are micronized.

In the present invention, as described above, the ultrafine fibrous cellulose may be obtained by removing at least a part of the above-described ionic group from the ultrafine fibrous cellulose defibrated by introducing the ionic group, and it is preferable to remove the ionic group from the viewpoint of lowering the YI value before heating and from the viewpoint of suppressing yellowing due to heating. In addition, the ionic group may not be completely removed. For example, the ionic group is preferably removed so that the amount of the ionic group is less than 0.50 mmol/g.

In this case, the ionic group is preferably removed from the defibrated ultrafine fibrous cellulose, and then a uniform dispersion treatment is performed to obtain an ultrafine fibrous cellulose dispersion liquid. Removing the ionic group is preferred because a sheet having a low YI value and suppressed yellowing due to heating is obtained.

The ultrafine fibrous cellulose may have a carbamide group derived from ureas and/or ureas derivatives which are added in the production process of the ultrafine fibrous cellulose to be described later. In this case, the introduction amount of the carbamide group (carbamide group amount) in the ultrafine fibrous cellulose is, for example, preferably 1.50 mmol/g or less, more preferably 1.00 mmol/g or less, still more preferably 0.30 mmol/g or less, and particularly preferably 0.20 mmol/g or less per 1 g (mass) of the ultrafine fibrous cellulose. The introduction amount of the carbamide group (carbamide group amount) in the fibrous cellulose may be 0.00 mmol/g. Since the carbamide group and the phosphorus oxo acid group are groups introduced by reacting with the hydroxy group of cellulose, the introduction amount of the phosphorus oxo acid group decreases as the introduction amount of the carbamide group increases. Therefore, by setting the introduction amount of the carbamide group to be within the above range, the introduction amount of the phosphorus oxo acid group can be increased to be within an appropriate range. In addition, since the carbamide group itself has no electrical conductivity, a charge repulsion effect (the effect of refining the fibrous cellulose) cannot be obtained by the introduction of the carbamide group. Therefore, by setting the introduction amount of the carbamide group to be within the above range, the dispersibility of the fibrous cellulose in solvents can be more effectively increased by increasing the introduction amount of the phosphorus oxo acid group, and an ultrafine fibrous cellulose-containing dispersion liquid having high transparency can be easily obtained.

The introduction amount of the carbamide group is determined by measuring the amount of nitrogen covalently bonded to the fibrous cellulose. Specifically, the amount of nitrogen is measured by a trace nitrogen analysis method after ionic nitrogen (ammonium ion) is liberated and removed from a measurement target containing the fibrous cellulose. The liberation of ionic nitrogen (ammonium ion) is performed under conditions in which nitrogen covalently bonded to cellulose is not substantially removed. For example, after the phosphorus oxo acid group introducing step, ammonium ions may be liberated by an alkali treatment and removed by washing, and then the defibration treatment may be performed, or ammonium ions may be adsorbed and removed by a strongly acidic ion exchange resin after the defibration treatment step. As a measuring machine for the amount of nitrogen by the trace nitrogen analysis method, for example, a trace total nitrogen analyzer TN-110 manufactured by Mitsubishi Chemical Analytech Co., Ltd. can be used. Before the measurement, the fibrous cellulose is dried at a low temperature (for example, 40°C, 24 hours in a vacuum drier) until it becomes absolutely dry. The introduction amount (mmol/g) of the carbamide group per unit mass of the fibrous cellulose is calculated by dividing the nitrogen content (g/g) per unit mass of the fibrous cellulose obtained by the trace nitrogen analysis by the atomic weight of nitrogen.

[Method for Producing Ultrafine Fibrous Cellulose]

(Cellulose-Containing Fiber Raw Material)

The ultrafine fibrous cellulose is produced from a cellulose-containing fiber raw material.

The cellulose-containing fiber raw material is not particularly limited, but pulp is preferably used because it is easily available and inexpensive. Examples of the pulp include wood pulp, non-wood pulp, and deinked pulp. The wood pulp is not particularly limited, but examples thereof include chemical pulps such as broad leaved tree kraft pulp (LBKP), needle leaved tree kraft pulp (NBKP), sulfite pulp (SP), dissolving pulp (DP), soda pulp (AP), unbleached kraft pulp (UKP) and oxygen bleached kraft pulp (OKP), semi-chemical pulps such as semi-chemical pulp (SCP) and chemigroundwood pulp (CGP), and mechanical pulps such as ground wood pulp (GP) and thermo-mechanical pulp (TMP, BCTMP). The non-wood pulp is not particularly limited, but examples thereof include cotton-based pulps such as cotton linter and

cotton lint, and non-wood-based pulps such as hemp, straw, bamboo, and bagasse. The deinked pulp is not particularly limited, but examples thereof include deinked pulp whose raw material is used paper. For the pulp in the present embodiment, one of the types may be used alone, or two or more types may be mixed and used.

Among the pulps, from the viewpoint of ease of availability, for example, wood pulp and deinked pulp are preferable. In addition, among the wood pulps, from the viewpoint of a high cellulose ratio and a high yield of ultrafine fibrous cellulose during a defibration treatment, or from the viewpoint of obtaining ultrafine fibrous cellulose of long fibers with a high axial ratio, in which decomposition of cellulose in pulp is low, for example, chemical pulp is more preferable, and kraft pulp and sulfite pulp are further preferable. When the ultrafine fibrous cellulose of long fibers with a high axial ratio is used, the viscosity tends to be increased.

Examples of the cellulose-containing fiber raw material include cellulose contained in ascidians or bacteria cellulose produced by acetic acid bacteria.

In addition, instead of the cellulose-containing fiber raw material, fibers formed by linear nitrogen-containing polysaccharide polymers such as chitin and chitosan may also be used.

In order to obtain the above-described ultrafine fibrous cellulose in which an ionic group is introduced, it is preferable to include an ionic group introducing step of introducing the ionic group into the above-described cellulose-containing fiber raw material, a washing step, an alkali treatment step (neutralization step), and a defibration treatment step in this order, and instead of the washing step, or in addition to the washing step, an acid treatment step may be included. Examples of the ionic group introducing step include a phosphorus oxo acid group introducing step, a carboxy group introducing step, and a sulfur oxo acid group introducing step. Each of these steps will be described below.

(Ionic Group Introducing Step)

- Phosphorus Oxo Acid Group Introducing Step -

The phosphorus oxo acid group introducing step is a step in which at least one type of compound selected from compounds capable of introducing a phosphorus oxo acid group by reacting with a hydroxy group included in the cellulose-containing fiber raw material (hereinafter, also referred to as a "compound A") is allowed to act on the cellulose-containing fiber raw material. Through this step, phosphorus oxo acid group-introduced fibers are obtained.

In the phosphoric acid group introducing step according to the present embodiment, the reaction between the cellulose-containing fiber raw material and the compound A may be performed in the presence of at least one type selected from urea and its derivatives (hereinafter, also referred to as a "compound B"). Meanwhile, in a state where the compound B is not present, the reaction between the cellulose-containing fiber raw material and the compound A may be performed.

As an example of a method of allowing the compound A to act on the fiber raw material in the coexistence with the compound B, a method of mixing the compound A and the compound B with the fiber raw material in a dry state, a wet state or a slurry state may be exemplified. Among them, in terms of high uniformity of the reaction, it is preferable to use the fiber raw material in a dry state or a wet state, and it is particularly preferable to use the fiber raw material in a dry state. The form of the fiber raw material is not particularly limited, but is preferably, for example, cotton-like or thin sheet-like. A method may be exemplified in which each of the compound A and the compound B, in a powder state or in a state of a solution obtained through dissolution in a solvent or in a melted state made through heating to a melting point or higher, is added to the fiber raw material. Among them, in terms of high uniformity of the reaction, addition in a state of a solution obtained through dissolution in a solvent, in particular, in an aqueous solution state, is preferable. In addition, the compound A and the compound B may be added to the fiber raw material at the same time, may be separately added, or may be added as a mixture. The method of adding the compound A and the compound B is not particularly limited, but when the compound A and the compound B are in a solution state, the fiber raw material may be immersed in the solution to absorb the liquid and then may be taken out, or the solution may be added dropwise to the fiber raw material. In addition, required amounts of the compound A and the compound B may be added to the fiber raw material, or after excess amounts of the compound A and the compound B are respectively added to the fiber raw material, the excess compound A and the compound B may be removed through pressing or filtering.

The compound A used in the present embodiment may be a compound that has a phosphorus atom and is capable of forming an ester bond with cellulose, and examples thereof include phosphoric acid or a salt thereof, phosphorous acid or a salt thereof, dehydrated condensed phosphoric acid or a salt thereof, and phosphoric anhydride (diphosphorus pentoxide), but are not particularly limited. As for the phosphoric acid, those having various purities may be used, and, examples thereof include 100% phosphoric acid (orthophosphoric acid) or 85% phosphoric acid. Examples of the phosphorous acid include 99% phosphorous acid (phosphonic acid). The dehydrated condensed phosphoric acid is obtained by condensing two or more molecules of the phosphoric acid through a dehydration reaction, and examples thereof include pyrophosphoric acid, and polyphosphoric acid. Examples of phosphate, phosphite, and dehydrated condensed phosphate include lithium salts, sodium salts, potassium salts, and ammonium salts of phosphoric acid,

phosphorous acid or dehydrated condensed phosphoric acid, and these may have various degrees of neutralization.

Among them, from the viewpoint of easier improvement in the defibration efficiency in a defibration treatment step to be described later, a low cost and an ease of industrial application due to high introduction efficiency of the phosphoric acid group, phosphoric acid, a sodium salt of phosphoric acid, a potassium salt of phosphoric acid, or an ammonium salt of phosphoric acid is preferable, and phosphoric acid, sodium dihydrogen phosphate, disodium hydrogen phosphate, or ammonium dihydrogen phosphate is more preferable.

The amount of the compound A added to the fiber raw material is not particularly limited, but, for example, in a case where the addition amount of the compound A is converted into a phosphorus atomic weight, the amount of phosphorus atoms added to the fiber raw material (absolute dry mass) is preferably 0.5% by mass or more and 100% by mass or less, more preferably 1% by mass or more and 50% by mass or less, and still more preferably 2% by mass or more and 30% by mass or less. When the amount of phosphorus atoms added to the fiber raw material is set within the range, the yield of the ultrafine fibrous cellulose can be further improved. Meanwhile, when the amount of phosphorus atoms added to the fiber raw material is set to the upper limit value or less, a yield improving effect and a cost can be balanced.

As described above, the compound B used in the present embodiment is at least one type selected from urea and its derivatives. Examples of the compound B include urea, biuret, 1-phenylurea, 1-benzylurea, 1-methylurea, and 1-ethylurea.

From the viewpoint of improving the uniformity of a reaction, it is preferable to use the compound B as an aqueous solution. In addition, from the viewpoint of further improving the uniformity of a reaction, it is preferable to use an aqueous solution in which both the compound A and the compound B are dissolved.

The amount of the compound B added to the fiber raw material (absolute dry mass) is not particularly limited, but is preferably, for example, 1% by mass or more and 500% by mass or less, more preferably 10% by mass or more and 400% by mass or less, and still more preferably 100% by mass or more and 350% by mass or less.

In the reaction between the cellulose-containing fiber raw material and the compound A, in addition to the compound B, for example, amides or amines may be included in the reaction system. Examples of the amides include formamide, dimethylformamide, acetamide, and dimethylacetamide. Examples of the amines include methylamine, ethylamine, trimethylamine, triethylamine, monoethanolamine, diethanolamine, triethanolamine, pyridine, ethylenediamine, and hexamethylenediamine. Among them, especially, triethylamine is known to act as a good reaction catalyst.

In the phosphorus oxo acid group introducing step, it is preferable that after the compound A, etc. are added or mixed to/with the fiber raw material, a heat treatment is carried out on the corresponding fiber raw material. As for the heat treatment temperature, it is preferable to choose a temperature at which a thermal decomposition or a hydrolysis reaction of fibers can be suppressed while the phosphorus oxo acid group can be efficiently introduced. The heat treatment temperature is preferably, for example, 50°C or higher and 300°C or lower, more preferably 100°C or higher and 250°C or lower, and still more preferably 130°C or higher and 200°C or lower. In addition, for the heat treatment, devices having various heat media may be used, and examples thereof include a stirring drying device, a rotary drying device, a disk drying device, a roll-type heating device, a plate-type heating device, a fluidized bed drying device, a band-type drying device, a filtration drying device, a vibration fluidized drying device, an air flow drying device, a vacuum-drying device, an infrared heating device, a far-infrared heating device, a microwave heating device, and a high-frequency drying device.

In the heat treatment according to the present embodiment, it is possible to employ, for example, a method of performing heating after adding the compound A to a thin sheet-like fiber raw material through a method such as impregnation, or a method of performing heating while kneading or stirring the fiber raw material and the compound A by a kneader or the like. According to this, it is possible to suppress unevenness of the concentration of the compound A in the fiber raw material and to more uniformly introduce the phosphoric acid group to the surface of the cellulose fiber contained in the fiber raw material. It may be thought that this is because as the drying is performed, when water molecules move to the surface of the fiber raw material, the dissolved compound A can be suppressed from being attracted to the water molecules by surface tension, and similarly moving to the surface of the fiber raw material (that is, unevenness of the concentration of the compound A is caused).

In addition, it is preferable that the heating device used for the heat treatment is, for example, a device capable of always discharging the water content retained by the slurry, and the water content produced according to a dehydration condensation (phosphate esterification) reaction between the compound A and a hydroxy group, etc. included in cellulose, etc. in the fiber raw material, to the outside of a device system. Examples of such a heating device include a blowing-type oven. By always discharging the water content within the device system, not only a hydrolysis reaction of a phosphoric acid ester bond, as a reverse reaction of phosphate esterification, can be suppressed, but also acid hydrolysis of a sugar chain within fibers can be suppressed. This makes it possible to obtain ultrafine fibrous cellulose with a high axial ratio.

The time for the heat treatment is, for example, preferably 1 second or more and 300 minutes or less after the water content is substantially removed from the fiber raw material, more preferably 1 second or more and 1,000 seconds or less, and still more preferably 10 seconds or more and 800 seconds or less. In the present embodiment, when the

heating temperature and the heating time are set within appropriate ranges, the introduction amount of the phosphorus oxo acid groups may be set within a preferable range.

The phosphorus oxo acid group introducing step may be performed at least once, but may be repeatedly performed twice or more. By performing the phosphorus oxo acid group introducing step twice or more, it is possible to introduce many phosphorus oxo acid groups into the fiber raw material. In the present embodiment, as an example of a preferred embodiment, there may be a case where the phosphorus oxo acid group introducing step is performed twice.

The amount of the phosphorus oxo acid groups introduced into the fiber raw material is, for example, preferably 0.10 mmol/g or more, more preferably 0.20 mmol/g or more, still more preferably 0.50 mmol/g or more, even more preferably 0.80 mmol/g or more, and particularly preferably 1.00 mmol/g or more per 1 g (mass) of the fibrous cellulose. On the other hand, the amount of the phosphorus oxo acid groups introduced into the fiber raw material is, for example, preferably 5.20 mmol/g or less, more preferably 3.65 mmol/g or less, and still more preferably 3.00 mmol/g or less per 1 g (mass) of the fibrous cellulose. When the introduction amount of the phosphorus oxo acid groups is set within the above range, it is possible to facilitate the micronizing of the fiber raw material and to increase the stability of the ultrafine fibrous cellulose.

- Carboxy Group Introducing Step -

The carboxy group introducing step is performed by subjecting the cellulose-containing fiber raw material to oxidation treatment such as ozone oxidation, oxidation using a Fenton method, or a TEMPO oxidation treatment, or treatment with a compound having a carboxylic acid-derived group or its derivative, or an acid anhydride of a compound having a carboxylic acid-derived group or its derivative.

The compound having the carboxylic acid-derived group is not particularly limited, but examples thereof include dicarboxylic acid compounds such as maleic acid, succinic acid, phthalic acid, fumaric acid, glutaric acid, adipic acid, and itaconic acid, or tricarboxylic acid compounds such as citric acid, and aconitic acid. In addition, the derivative of the compound having the carboxylic acid-derived group is not particularly limited, but examples thereof include imidization products of an acid anhydride of a compound having a carboxy group, and derivatives of an acid anhydride of a compound having a carboxy group. The imidization product of the acid anhydride of the compound having the carboxy group is not particularly limited, but examples thereof include imidization products of dicarboxylic acid compounds, such as maleimide, succinimide, and phthalimide.

The acid anhydride of the compound having the carboxylic acid-derived group is not particularly limited, but examples thereof include acid anhydrides of dicarboxylic acid compounds, such as maleic anhydride, succinic anhydride, phthalic anhydride, glutaric anhydride, adipic anhydride, and itaconic anhydride. In addition, the derivative of the acid anhydride of the compound having the carboxylic acid-derived group is not particularly limited, but examples thereof include those in which at least a part of hydrogen atoms of the acid anhydride of the compound having the carboxy group, such as dimethylmaleic anhydride, diethylmaleic anhydride, or diphenylmaleic anhydride, is substituted with a substituent such as an alkyl group or a phenyl group.

In the carboxy group introducing step, when the TEMPO oxidation treatment is performed, for example, it is preferable to perform the treatment under conditions where the pH is 6 or more and 8 or less. Such a treatment is also called a neutral TEMPO oxidation treatment. The neutral TEMPO oxidation treatment may be performed by adding, for example, pulp as the fiber raw material, a nitroxy radical such as TEMPO (2,2,6,6-tetramethylpiperidine-1-oxyl) as a catalyst, and sodium hypochlorite as a sacrificial reagent, to sodium phosphate buffer solution (pH = 6.8). Further, through coexistence with sodium chlorite, aldehyde generated in the oxidation process can be efficiently oxidized to a carboxy group.

In addition, in the TEMPO oxidation treatment, the treatment may be performed under conditions where the pH is 10 or more and 11 or less. Such a treatment is also called an alkali TEMPO oxidation treatment. The alkali TEMPO oxidation treatment may be performed by adding, for example, a nitroxy radical such as TEMPO as a catalyst, sodium bromide as a cocatalyst, and sodium hypochlorite as an oxidant, to pulp as the fiber raw material.

The amount of the carboxy groups introduced into the fiber raw material changes depending on the type of the substituent, and is, for example, preferably 0.10 mmol/g or more, more preferably 0.20 mmol/g or more, still more preferably 0.50 mmol/g or more, even more preferably 0.80 mmol/g or more, and particularly preferably 0.90 mmol/g or more per 1 g (mass) of the fibrous cellulose in a case where the carboxy groups are introduced through TEMPO oxidation. On the other hand, it is preferably 2.5 mmol/g or less, more preferably 2.20 mmol/g or less, and still more preferably 2.00 mmol/g or less. In addition, when the substituent is a carboxymethyl group, it may be 5.8 mmol/g or less per 1 g (mass) of the fibrous cellulose.

- Sulfur Oxo Acid Group Introducing Step -

The production process of the ultrafine fibrous cellulose may include, for example, a sulfur oxo acid group

introducing step as the ionic substituent introducing step. In the sulfur oxo acid group introducing step, a cellulose fiber having a sulfur oxo acid group (a sulfur oxo acid group-introduced fiber) can be obtained by reacting a hydroxy group of a fiber raw material containing cellulose with a sulfur oxo acid.

In the sulfur oxo acid group introducing step, at least one compound (hereinafter, also referred to as a "compound C") selected from compounds capable of introducing a sulfur oxo acid group by reacting with a hydroxy group included in the cellulose-containing fiber raw material is used instead of the compound A in the above-described <Phosphorus Oxo Acid Group Introducing Step>. The compound C is not particularly limited as long as it is a compound having a sulfur atom and capable of forming an ester bond with cellulose, and examples thereof include sulfuric acid or a salt thereof, sulfurous acid or a salt thereof, and sulfuric acid amide. As the sulfuric acid, those having various purities can be used, and for example, 96% sulfuric acid (concentrated sulfuric acid) can be used. Examples of the sulfurous acid include 5% aqueous sulfurous acid. Examples of the sulfate or sulfite include a lithium salt, a sodium salt, a potassium salt, and an ammonium salt of a sulfate or sulfite, and these may have various degrees of neutralization. As the sulfuric acid amide, sulfamic acid or the like can be used. In the sulfur oxo acid group introducing step, the compound B in the above-described <Phosphorus Oxo Acid Group Introducing Step> is preferably used in the same manner.

In the sulfur oxo acid group introducing step, the cellulose raw material is preferably mixed with an aqueous solution containing a sulfur oxo acid and urea and/or a urea derivative, and then the cellulose raw material is preferably subjected to a heat treatment. As for the heat treatment temperature, it is preferable to choose a temperature at which a thermal decomposition or a hydrolysis reaction of fibers can be suppressed while the sulfur oxo acid group can be efficiently introduced. The heat treatment temperature is preferably 100°C or higher, more preferably 120°C or higher, and still more preferably 150°C or higher. On the other hand, the heat treatment temperature is preferably 300°C or lower, more preferably 250°C or lower, and still more preferably 200°C or lower.

In the heat treatment step, heating is preferably performed until the water content is substantially eliminated. Therefore, the heat treatment time varies depending on the amount of water contained in the cellulose raw material and the addition amount of the aqueous solution containing a sulfur oxo acid and urea and/or a urea derivative, but is preferably, for example, 10 seconds or more and 10,000 seconds or less. For the heat treatment, devices having various heat media may be used, and examples thereof include a stirring drying device, a rotary drying device, a disk drying device, a roll-type heating device, a plate-type heating device, a fluidized bed drying device, a band-type drying device, a filtration drying device, a vibration fluidized drying device, an air flow drying device, a vacuum-drying device, an infrared heating device, a far-infrared heating device, a microwave heating device, and a high-frequency drying device.

The amount of the sulfur oxo acid groups introduced into the cellulose raw material is preferably 0.05 mmol/g or more, more preferably 0.10 mmol/g or more, still more preferably 0.20 mmol/g or more, even more preferably 0.50 mmol/g or more, yet still more preferably 0.80 mmol/g or more, and particularly preferably 0.90 mmol/g or more. On the other hand, the amount of the sulfur oxo acid groups introduced into the cellulose raw material is preferably 5.00 mmol/g or less, and more preferably 3.00 mmol/g or less. When the introduction amount of the sulfur oxo acid groups is set within the range, it is possible to facilitate the micronizing of the fiber raw material, and to increase the stability of the fibrous cellulose.

- Oxidation Step with Chlorine-Based Oxidizing Agent (Second Carboxy Group Introducing Step) -

The production process of the ultrafine fibrous cellulose may include, for example, an oxidation step with a chlorine-based oxidizing agent as the ionic substituent introducing step. In the oxidation step with a chlorine-based oxidizing agent, a carboxy group is introduced into the fiber raw material by adding the chlorine-based oxidizing agent to the fiber raw material having a hydroxy group in a wet or dry state and performing a reaction.

Examples of the chlorine-based oxidizing agent include hypochlorous acid, hypochlorite, chlorous acid, chlorite, chloric acid, chlorate, perchloric acid, perchlorate, and chlorine dioxide. Sodium hypochlorite, sodium chlorite, and chlorine dioxide are preferable from the viewpoint of introduction efficiency of a substituent, and thus defibration efficiency, cost, and ease of handling.

As the chlorine-based oxidizing agent, a reagent may be added to the fiber raw material as it is, or may be added after being dissolved in an appropriate solvent.

The concentration of the chlorine-based oxidizing agent in the solution in the oxidation step with the chlorine-based oxidizing agent is, for example, preferably 1% by mass or more and 1,000% by mass or less, more preferably 5% by mass or more and 500% by mass or less, and still more preferably 10% by mass or more and 100% by mass or less in terms of the effective chlorine concentration.

The addition amount of the chlorine-based oxidizing agent with respect to 100 parts by mass of the fiber raw material is preferably 1 part by mass or more and 100,000 parts by mass or less, more preferably 10 parts by mass or more and 10,000 parts by mass or less, and still more preferably 100 parts by mass or more and 5,000 parts by mass or less.

The reaction time with the chlorine-based oxidizing agent in the oxidation step with the chlorine-based oxidizing

agent may vary depending on the reaction temperature, but is, for example, preferably 1 minute or more and 1,000 minutes or less, more preferably 10 minutes or more and 500 minutes or less, and still more preferably 20 minutes or more and 400 minutes or less.

The pH during the reaction is preferably 5 or more and 15 or less, more preferably 7 or more and 14 or less, and still more preferably 9 or more and 13 or less. Further, at the start of the reaction, the pH during the reaction is preferably kept constant (e.g., pH 11) while hydrochloric acid or sodium hydroxide is appropriately added. In addition, after the reaction, excess reaction reagents, by-products, and the like may be washed and removed by filtration or the like.

- Xanthate Group Introducing Step (Xanthate Esterification Step) -

The production process of the ultrafine fibrous cellulose may include, for example, a xanthate group introducing step (hereinafter, also referred to as a xanthation step) as the ionic substituent introducing step. In the xanthation step, a xanthate group is introduced into a fiber raw material by adding carbon disulfide and an alkali compound to the fiber raw material having a hydroxy group in a wet or dry state and performing a reaction. Specifically, carbon disulfide is added to a fiber raw material which has been converted into alkali cellulose by a method described below, and the reaction is performed.

«Alkali Cellulose Conversion»

When the ionic functional group is introduced into the fiber raw material, it is preferable that an alkali solution is allowed to act on cellulose included in the fiber raw material to convert the cellulose into alkali cellulose. By this treatment, a part of hydroxy groups of the cellulose is ionically dissociated, and the nucleophilicity (reactivity) can be increased. An alkali compound contained in the alkali solution is not particularly limited, and may be an inorganic alkali compound or may be an organic alkali compound. It is preferable to use, for example, sodium hydroxide, potassium hydroxide, tetraethylammonium hydroxide, or tetrabutylammonium hydroxide because of high versatility. The alkali cellulose conversion may be performed at the same time as the introduction of the ionic functional group, may be performed as a previous stage thereof, or may be performed at both timings.

The solution temperature at the start of the alkali cellulose conversion is preferably 0°C or higher and 50°C or lower, more preferably 5°C or higher and 40°C or lower, and still more preferably 10°C or higher and 30°C or lower.

The molar concentration of the alkali solution is preferably 0.01 mol/L or more and 4 mol/L or less, more preferably 0.1 mol/L or more and 3 mol/L or less, and still more preferably 1 mol/L or more and 2.5 mol/L or less. In particular, when the treatment temperature is lower than 10°C, it is preferably 1 mol/L or more and 2 mol/L or less.

The treatment time of the alkali cellulose conversion is preferably 1 minute or more, more preferably 10 minutes or more, and still more preferably 30 minutes or more. The time of the alkali treatment is preferably 6 hours or less, more preferably 5 hours or less, and still more preferably 4 hours or less.

By adjusting the type, treatment temperature, concentration, and immersion time of the alkali solution as described above, penetration of the alkali solution into the crystalline region of cellulose can be suppressed, the crystal structure of cellulose I-type crystals can be easily maintained, and the yield of ultrafine fibrous cellulose can be increased.

When the introduction of the ionic functional group and the alkali cellulose conversion are not performed at the same time, the alkali cellulose obtained by the alkali treatment is preferably subjected to solid-liquid separation by a general liquid removal method such as centrifugation or filtration to remove water. This improves the reaction efficiency in the subsequent ionic functional group introducing step. The cellulose fiber concentration after the solid-liquid separation is preferably 5% or more and 50% or less, more preferably 10% or more and 40% or less, and still more preferably 15% or more and 35% or less.

- Phosphonic Group or Phosphine Group Introducing Step (Phosphoalkylation Step) -

The ionic substituent introducing step may include a phosphonic group or phosphine group introducing step (phosphoalkylation step). In the phosphoalkylation step, a phosphonic group or a phosphine group is introduced into a fiber raw material by adding a compound (compound $E_A$) having a reactive group and a phospho group or a phosphine group as an essential component, and an alkali compound and a compound B selected from the above-described urea and a derivative thereof as optional components to the fiber raw material having a hydroxy group in a wet or dry state and performing a reaction.

Examples of the reactive group include a halogenated alkyl group, a vinyl group, and an epoxy group (glycidyl group).

Examples of the compound $E_A$ include vinylphosphonic acid, phenylvinylphosphonic acid, and phenylvinylphosphinic acid. The compound $E_A$ is preferably vinylphosphonic acid from the viewpoint of introduction efficiency of a substituent, and thus defibration efficiency, cost, and ease of handling.

Further, as an optional component, the compound B in the above-described <Phosphorus Oxo Acid Group Introducing Step> is preferably used in the same manner, and the addition amount is also preferably set as described above.

When the compound $E_A$ is added, the compound $E_A$ may be directly added to the fiber raw material as it is as a reagent (solid or liquid), or may be added after being dissolved in an appropriate solvent. The fiber raw material is preferably converted into alkali cellulose in advance or converted into alkali cellulose simultaneously with the reaction. The method of the alkali cellulose conversion is as described above.

The temperature during the reaction is, for example, preferably 50°C or higher and 300°C or lower, more preferably 100°C or higher and 250°C or lower, and still more preferably 130°C or higher and 200°C or lower.

The addition amount of the compound $E_A$ with respect to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, but is preferably, for example, 1 minute or more and 1,000 minutes or less, more preferably 10 minutes or more and 500 minutes or less, and still more preferably 15 minutes or more and 400 minutes or less. In addition, after the reaction, excess reaction reagents, by-products, and the like may be washed and removed by filtration or the like.

- Sulfone Group Introducing Step (Sulfoalkylation Step) -

The production process of the ultrafine fibrous cellulose may include, for example, a sulfone group introducing step (sulfoalkylation step) as the ionic substituent introducing step. In the sulfoalkylation step, a sulfone group is introduced into a fiber raw material by adding a compound (compound $E_B$) having a reactive group and a sulfone group as an essential component, and an alkali compound and a compound B selected from the above-described urea and a derivative thereof as optional components to the fiber raw material having a hydroxy group in a wet or dry state and performing a reaction.

Examples of the reactive group include a halogenated alkyl group, a vinyl group, and an epoxy group (glycidyl group).

Examples of the compound $E_B$ include sodium 2-chloroethanesulfonate, sodium vinyl sulfonate, sodium p-styrenesulfonate, and 2-acrylamido-2-methylpropanesulfonic acid. Among these, sodium vinyl sulfonate is preferable from the viewpoint of introduction efficiency of a substituent, and thus defibration efficiency, cost, and ease of handling.

Further, as an optional component, the compound B in the above-described <Phosphorus Oxo Acid Group Introducing Step> is preferably used in the same manner, and the addition amount is also preferably set as described above.

As the compound $E_B$, a reagent may be added to the fiber raw material as it is, or may be added after being dissolved in an appropriate solvent. The fiber raw material is preferably converted into alkali cellulose in advance or converted into alkali cellulose simultaneously with the reaction. The method of the alkali cellulose conversion is as described above.

The temperature during the reaction is, for example, preferably 50°C or higher and 300°C or lower, more preferably 100°C or higher and 250°C or lower, and still more preferably 130°C or higher and 200°C or lower.

The addition amount of the compound $E_B$ with respect to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, but is preferably, for example, 1 minute or more and 1,000 minutes or less, more preferably 10 minutes or more and 500 minutes or less, and still more preferably 20 minutes or more and 400 minutes or less.

In addition, after the reaction, excess reaction reagents, by-products, and the like may be washed and removed by filtration or the like.

- Carboxyalkylation Step (Third Carboxy Group Introducing Step) -

The production process of the ultrafine fibrous cellulose may include, for example, a carboxyalkylation step as the ionic substituent introducing step. A carboxy group is introduced into a fiber raw material by adding a compound (compound Ec) having a reactive group and a carboxy group as an essential component, and an alkali compound and a compound B selected from the above-described urea and a derivative thereof as optional components to the fiber raw material having a hydroxy group in a wet or dry state and performing a reaction.

Examples of the reactive group include a halogenated alkyl group, a vinyl group, and an epoxy group (glycidyl group).

As the compound $E_C$, monochloroacetic acid, sodium monochloroacetate, 2-chloropropionic acid, 3-chloropropionic acid, sodium 2-chloropropionate, and sodium 3-chloropropionate are preferable from the viewpoint of introduction efficiency of a substituent, and thus defibration efficiency, cost, and ease of handling.

Further, as an optional component, the compound B in the above-described <Phosphorus Oxo Acid Group Introducing Step> is preferably used in the same manner, and the addition amount is also preferably set as described above.

As the compound $E_C$, a reagent may be added to the fiber raw material as it is, or may be added after being dissolved in an appropriate solvent. The fiber raw material is preferably converted into alkali cellulose in advance or converted into alkali cellulose simultaneously with the reaction. The method of the alkali cellulose conversion is as described above.

The temperature during the reaction is, for example, preferably 50°C or higher and 300°C or lower, more preferably 100°C or higher and 250°C or lower, and still more preferably 130°C or higher and 200°C or lower.

The addition amount of the compound Ec with respect to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, but is preferably, for example, 1 minute or more and 1,000 minutes or less, more preferably 3 minutes or more and 500 minutes or less, and still more preferably 5 minutes or more and 400 minutes or less.

In addition, after the reaction, excess reaction reagents, by-products, and the like may be washed and removed by filtration or the like.

- Cationic Group Introducing Step (Cationization Step) -

A cationic group is introduced into a fiber raw material by adding a compound (compound $E_D$) having a reactive group and a cationic group as an essential component, and an alkali compound and a compound B selected from the above-described urea and a derivative thereof as optional components to the fiber raw material having a hydroxy group in a wet or dry state and performing a reaction.

Examples of the reactive group include a halogenated alkyl group, a vinyl group, and an epoxy group (glycidyl group).

As the compound $E_D$, glycidyl trimethyl ammonium chloride, 3-chloro-2-hydroxypropyl trimethyl ammonium chloride, and the like are preferable from the viewpoint of introduction efficiency of a substituent, and thus defibration efficiency, cost, and ease of handling.

Further, as an optional component, the compound B in the above-described <Phosphorus Oxo Acid Group Introducing Step> is preferably used in the same manner. The addition amount is also preferably set as described above.

As the compound $E_D$, a reagent may be added to the fiber raw material as it is, or may be added after being dissolved in an appropriate solvent. The fiber raw material is preferably converted into alkali cellulose in advance or converted into alkali cellulose simultaneously with the reaction. The method of the alkali cellulose conversion is as described above.

The temperature during the reaction is, for example, preferably 50°C or higher and 300°C or lower, more preferably 100°C or higher and 250°C or lower, and still more preferably 130°C or higher and 200°C or lower.

The addition amount of the compound $E_D$ with respect to 100 parts by mass of the fiber raw material is preferably 1 part by mass or more and 100,000 parts by mass or less, more preferably 2 parts by mass or more and 10,000 parts by mass or less, and still more preferably 5 parts by mass or more and 1,000 parts by mass or less.

The reaction time may vary depending on the reaction temperature, but is preferably, for example, 1 minute or more and 1,000 minutes or less, more preferably 5 minutes or more and 500 minutes or less, and still more preferably 10 minutes or more and 400 minutes or less.

In addition, after the reaction, excess reaction reagents, by-products, and the like may be washed and removed by filtration or the like.

(Washing Step)

In the method for producing the ultrafine fibrous cellulose in the present embodiment, as necessary, a washing step may be performed on ionic group-introduced fibers. The washing step is performed by washing the ionic group-introduced fibers with, for example, water or an organic solvent. In addition, the washing step may be performed after each step to be described later, and the number of times of washing performed in each washing step is not particularly limited.

(Alkali Treatment Step)

When the ultrafine fibrous cellulose is produced, an alkali treatment may be performed on the fiber raw material between the ionic group introducing step and a defibration treatment step to be described later. The method for the alkali treatment is not particularly limited, but examples thereof include a method of immersing the ionic group-introduced fibers in an alkali solution.

An alkali compound contained in the alkali solution is not particularly limited, and may be an inorganic alkali compound or may be an organic alkali compound. In the present embodiment, it is preferable to use, for example, sodium hydroxide or potassium hydroxide as the alkali compound in terms of high versatility. In addition, a solvent contained in the alkali solution may be either water or an organic solvent. Among them, the solvent contained in the alkali solution is preferably a polar solvent, including water, or a polar organic solvent (for example, alcohol), more preferably an aqueous solvent including at least water. As the alkali solution, in terms of high versatility, for example, a sodium hydroxide aqueous solution, or a potassium hydroxide aqueous solution is preferable.

The temperature of the alkali solution in the alkali treatment step is not particularly limited, but is preferably, for example, 5°C or higher and 80°C or lower, and more preferably 10°C or higher and 60°C or lower. The immersion time of the ionic group-introduced fibers in the alkali solution in the alkali treatment step is not particularly limited, but is preferably, for example, 5 minutes or more and 30 minutes or less, and more preferably 10 minutes or more and 20 minutes or less. The use amount of the alkali solution in the alkali treatment is not particularly limited, but is preferably, for example, 100% by mass or more and 100,000% by mass or less, and more preferably 1,000% by mass or more and 10,000% by mass or less with respect to the absolute dry mass of the ionic group-introduced fibers.

When the ultrafine fibrous cellulose has an anionic group, the alkali treatment may be a neutralization treatment or an ion-exchange treatment of the anionic group. In this case, the temperature of the alkali solution is preferably room temperature.

In order to reduce the use amount of the alkali solution in the alkali treatment step, the ionic group-introduced fibers may be washed with water or an organic solvent after the ionic group introducing step and before the alkali treatment step. After the alkali treatment step and before the defibration treatment step, from the viewpoint of improving handleability, it is preferable that the ionic group-introduced fibers which have been subjected to the alkali treatment are washed with water or an organic solvent.

(Acid Treatment Step)

When the ultrafine fibrous cellulose is produced, an acid treatment may be performed on the fiber raw material between the ionic group introducing step and a defibration treatment step to be described later. For example, the ionic group introducing step, the acid treatment step, the alkali treatment step, and the defibration treatment step may be performed in this order.

The method for the acid treatment is not particularly limited, but examples thereof include a method of immersing the fiber raw material in an acid-containing acidic liquid. The concentration of the acidic liquid to be used is not particularly limited, but is preferably, for example, 10% by mass or less, and more preferably 5% by mass or less. In addition, the pH of the acidic liquid to be used is not particularly limited, but is preferably, for example, 0 or more and 4 or less, and more preferably 1 or more and 3 or less. Examples of the acid contained in the acidic liquid include inorganic acid, sulfonic acid, and carboxylic acid. Examples of the inorganic acid include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid include methanesulfonic acid, ethanesulfonic acid, benzenesulfonic acid, p-toluenesulfonic acid, and trifluoromethanesulfonic acid. Examples of the carboxylic acid include formic acid, acetic acid, citric acid, gluconic acid, lactic acid, oxalic acid, and tartaric acid. Among them, it is particularly preferable to use hydrochloric acid or sulfuric acid.

The temperature of the acid solution in the acid treatment is not particularly limited, but is preferably, for example, 5°C or higher and 100°C or lower, and more preferably 20°C or higher and 90°C or lower. The time of immersion in the acid solution in the acid treatment is not particularly limited, but is preferably, for example, 5 minutes or more and 120 minutes or less, and more preferably 10 minutes or more and 60 minutes or less. The use amount of the acid solution in the acid treatment is not particularly limited, but is preferably, for example, 100% by mass or more and 100,000% by mass or less, and more preferably 1,000% by mass or more and 10,000% by mass or less with respect to the absolute dry mass of the fiber raw material. When the ultrafine fibrous cellulose has a cationic group, the acid treatment may be a neutralization treatment or an ion-exchange treatment of the cationic group. In this case, the temperature of the acid solution is preferably room temperature.

(Defibration Treatment Step)

The ultrafine fibrous cellulose is obtained by defibering the ionic group-introduced fibers in the defibration treatment step.

In the defibration treatment step, for example, a defibration treatment apparatus may be used. The defibration treatment apparatus is not particularly limited, but, examples thereof include a high-speed defibrating apparatus, a grinder (a millstone-type crusher), a high pressure homogenizer or an ultra high pressure homogenizer, a high pressure collision-type crusher, a ball mill, a bead mill, a disc-type refiner, a conical refiner, a twin-screw kneader, a vibration mill, a homomixer under high-speed rotation, an ultrasonic disperser, and a beater. Among the defibration treatment apparatuses, it is more preferable to use a high-speed defibrating apparatus, a high pressure homogenizer, or an ultra high pressure homogenizer which is less affected by a crushing medium and has a low risk of contamination.

In the defibration treatment step, for example, it is preferable that the ionic group-introduced fibers are diluted with a dispersion medium to form a slurry. As for the dispersion medium, one type or two or more types selected from water, and organic solvents such as a polar organic solvent may be used. The polar organic solvent is not particularly limited, but, for example, alcohols, polyhydric alcohols, ketones, ethers, esters, an aprotic polar solvent and the like are preferable. Examples of the alcohols include methanol, ethanol, isopropanol, n-butanol, and isobutylalcohol. Examples of the polyhydric alcohols include ethyleneglycol, propyleneglycol, and glycerin. Examples of the ketones include acetone and methylethylketone (MEK). Examples of the ethers include diethylether, tetrahydrofuran, ethyleneglycol monomethylether, ethyleneglycol monoethylether, ethyleneglycol mono-n-butylether, and propyleneglycol monomethylether. Examples of the esters include ethyl acetate, and butyl acetate. Examples of the aprotic polar solvent include dimethylsulfoxide (DMSO), dimethylformamide (DMF), dimethylacetamide (DMAc), and N-methyl-2-pyrrolidinone (NMP).

The solid content concentration of the ultrafine fibrous cellulose at the time of the defibration treatment may be properly set.

The slurry obtained by dispersing the phosphorus oxo acid group-introduced fibers in the dispersion medium may contain a solid content other than the phosphorus oxo acid group-introduced fibers, such as urea having a hydrogen bonding property.

(Method for Producing Substituent-Removed Ultrafine Fibrous Cellulose)

In the present invention, the ultrafine fibrous cellulose may be obtained by removing ionic groups, which are substituents, from the above-described ultrafine fibrous cellulose defibrated by introducing ionic groups. The ionic groups are preferably removed from the viewpoint of lowering the YI value of the sheet and from the viewpoint of suppressing yellowing due to heating.

In this case, the method preferably includes a step (step I) of removing, from ultrafine fibrous cellulose having substituents, preferably ionic groups and having a fiber width of 1000 nm or less, at least a part of the substituents, and a step II of performing a uniform dispersion treatment after the step I.

In addition, the production process of the ultrafine fibrous cellulose to be subjected to the step I preferably includes a step of reducing a nitrogen content (nitrogen removal treatment step) before the defibration treatment.

- Nitrogen Removal Treatment Step -

The production process of the ultrafine fibrous cellulose to be subjected to the step I further includes a step of reducing a nitrogen content (nitrogen removal treatment step). By reducing the nitrogen content, an ultrafine fibrous cellulose capable of further suppressing coloring can be obtained. The nitrogen removal treatment step may be provided after the uniform dispersion treatment step in the step II described later, but is preferably provided before the uniform dispersion treatment step in the step II described later. In addition, the nitrogen removal treatment step is preferably provided before the defibration treatment step described above.

In the nitrogen removal treatment step, it is preferable to adjust the pH of the slurry containing the anionic group-introduced fibers to 10 or more and perform the heating treatment. In the heating treatment, it is preferable that the liquid temperature of the slurry is 50°C or higher and 100°C or lower, and the heating time is 15 minutes or more and 180 minutes or less. When the pH of the slurry containing the anionic group-introduced fibers is adjusted, it is preferable that the alkali compound which can be used in the alkali treatment step described above is added to the slurry.

After the nitrogen removal treatment step, a washing step can be performed on the anionic group-introduced fibers as necessary. The washing step is performed by washing the anionic group-introduced fibers with, for example, water or an organic solvent. Further, the number of times of washing performed in each washing step is not particularly limited.

- Step I -

In the present invention, the method for producing ultrafine fibrous cellulose may include a step (step I) of removing, from the ultrafine fibrous cellulose having substituents and having a fiber width of 10 nm or less, at least a part of the substituents. In the present specification, the step (step I) of removing at least a part of substituents from the ultrafine fibrous cellulose is also referred to as a substituent removal treatment step.

Examples of the substituent removal treatment step include a step of heating treatment of ultrafine fibrous cellulose having substituents and having a fiber width of 10 nm or less, a step of enzymatic treatment of the ultrafine fibrous cellulose, a step of acid treatment of the ultrafine fibrous cellulose, and a step of alkali treatment of the ultrafine fibrous cellulose. These steps may be performed alone or may be performed in combination. Among them, the substituent removal treatment step is preferably a step of heating treatment or a step of enzymatic treatment. By performing the above-described treatment step, at least a part of the substituents is removed from the ultrafine fibrous cellulose having substituents and having a fiber width of 10 nm or less, and for example, an ultrafine fibrous cellulose having an amount of substituents introduced of less than 0.5 mmol/g can be obtained.

The above-described substituent removal treatment step is suitable for a case where the substituent is a phosphorus oxo acid group or a sulfur oxo acid group.

The amount of substituents introduced after the substituent removal treatment step is preferably 0.3 mmol/g or less, more preferably 0.2 mmol/g or less, and still more preferably 0.1 mmol/g or less.

The substituent removal treatment step is preferably carried out in the form of a slurry. That is, the substituent removal treatment step is preferably a step of heating treatment of a slurry containing ultrafine fibrous cellulose having substituents and having a fiber width of 10 nm or less, a step of enzymatic treatment of the slurry, a step of acid treatment of the slurry, and a step of alkali treatment of the slurry. By carrying out the substituent removal treatment step in the form of a slurry, it is possible to prevent colored substances generated by heating or the like during the substituent removal treatment, and acids, alkalis, salts and the like added or generated from remaining. In this way, it is possible to suppress coloring when the ultrafine fibrous cellulose obtained via step II is made into a slurry or sheet. In addition, in a case where a removal treatment of a salt derived from the substituent removed after the substituent removal treatment is performed, it is also possible to increase the removal efficiency of the salt.

When a slurry containing ultrafine fibrous cellulose having substituents and having a fiber width of 10 nm or less is subjected to the substituent removal treatment, the concentration of ultrafine fibrous cellulose in the slurry is preferably 0.05% by mass or more, more preferably 0.1% by mass or more, and still more preferably 0.2% by mass or more. On the other hand, the concentration of ultrafine fibrous cellulose in the slurry is preferably 20% by mass or less, more preferably 15% by mass or less, and still more preferably 10% by mass or less. By setting the concentration of ultrafine fibrous cellulose in the slurry within the above range, the substituent removal treatment can be performed more efficiently. Further, by setting the concentration of ultrafine fibrous cellulose in the slurry within the above range, it is possible to prevent colored substances generated by heating or the like during the substituent removal treatment, and acids, alkalis, salts, and the like added or generated from remaining. In this way, it is possible to suppress coloring when the ultrafine fibrous cellulose obtained via step II is made into a slurry or sheet. In addition, in a case where a removal treatment of a salt derived from the substituent removed after the substituent removal treatment is performed, it is also possible to increase the removal efficiency of the salt.

When the substituent removal treatment step is a step of heating treatment of ultrafine fibrous cellulose having substituents and having a fiber width of 10 nm or less, the heating temperature in the step of heat treatment is preferably 40°C or higher, more preferably 50°C or higher, and still more preferably 60°C or higher. On the other hand, the heating temperature in the step of heating treatment is preferably 250°C or lower, more preferably 230°C or lower, and still more preferably 200°C or lower. Among other things, in a case where the substituents contained in the ultrafine fibrous cellulose to be subjected to the substituent removal treatment step are a phosphorus oxo acid group or a sulfone group, the heating temperature in the step of heating treatment is preferably 80°C or higher, more preferably 100°C or higher, and still more preferably 120°C or higher.

In a case where the substituent removal treatment step is a step of heating treatment, the heating device that can be used in the heating treatment step is not particularly limited, but a hot air heating device, a steam heating device, an electrothermal heating device, a hydrothermal heating device, a thermal heating device, an infrared heating device, a far-infrared heating device, a microwave heating device, a high-frequency heating device, a stirring drying device, a rotary drying device, a disk drying device, a roll-type heating device, a plate-type heating device, a fluidized bed drying device, a band-type drying device, a filtration drying device, a vibration flow drying device, an air flow drying device, or a reduced-pressure drying device can be used. From the viewpoint of preventing evaporation, the heating is preferably performed in a closed system, and from the viewpoint of further increasing the heating temperature, the heating is preferably performed in a pressure-resistant apparatus or container. The heating treatment may be a batch treatment, a batch continuous treatment, or a continuous treatment.

When the substituent removal treatment step is a step of enzymatic treatment of ultrafine fibrous cellulose

having substituents and having a fiber width of 10 nm or less, a phosphate hydrolase, a sulfate hydrolase, or the like is preferably used in the step of enzymatic treatment depending on the type of the substituents.

In the enzymatic treatment step, enzymes are added so that the enzymatic activity is preferably 0.1 nkat or more, more preferably 1.0 nkat or more, and still more preferably 10 nkat or more with respect to 1 g of the ultrafine fibrous cellulose. On the other hand, enzymes are added so that the enzymatic activity is preferably 100,000 nkat or less, more preferably 50,000 nkat or less, and still more preferably 10,000 nkat or less with respect to 1 g of the ultrafine fibrous cellulose. After the enzymes are added to the ultrafine fibrous cellulose dispersion liquid (slurry), it is preferable to perform the treatment for 1 minute or more and 100 hours or less under conditions of 0°C or higher and less than 50°C.

After the enzyme reaction, a step of deactivating the enzymes may be provided. Examples of the method for deactivating the enzymes include a method of deactivating the enzymes by adding an acid component or an alkali component to the slurry subjected to the enzymatic treatment, and a method of deactivating the enzymes by raising the temperature of the slurry subjected to the enzymatic treatment to 90°C or higher.

When the substituent removal treatment step is a step of acid treatment of ultrafine fibrous cellulose having substituents and having a fiber width of 10 nm or less, in the step of acid treatment, it is preferable to add an acid compound which can be used in the above-described acid treatment step to the slurry.

When the substituent removal treatment step is a step of alkali treatment of ultrafine fibrous cellulose having substituents and having a fiber width of 10 nm or less, in the step of alkali treatment, it is preferable to add an alkali compound which can be used in the above-described alkali treatment step to the slurry.

In the substituent removal treatment step, it is preferable that the substituent removal reaction proceeds uniformly. In order to make the reaction proceed uniformly, for example, the slurry containing the ultrafine fibrous cellulose may be stirred, or the specific surface area of the slurry may be increased. As a method for stirring the slurry, mechanical shear may be applied from the outside, or self-stirring may be promoted by increasing the liquid feeding speed of the slurry during the reaction.

In the substituent removal treatment step, a spacer molecule may be added. The spacer molecules are inserted between the adjacent ultrafine fibrous cellulose, thereby serving as a spacer for providing a minute space between the ultrafine fibrous cellulose. By adding such spacer molecules in the substituent removal treatment step, aggregation of the ultrafine fibrous cellulose after the substituent removal treatment can be suppressed. According to this, the transparency of the dispersion liquid or the sheet containing ultrafine fibrous cellulose can be more effectively enhanced.

The spacer molecule is preferably a water-soluble organic compound. Examples of the water-soluble organic compound include a sugar, a water-soluble polymer, and urea. Specific examples thereof include trehalose, urea, polyethylene glycol (PEG), polyethylene oxide (PEO), carboxymethyl cellulose, and polyvinyl alcohol (PVA). As the water-soluble organic compound, an alkyl methacrylate-acrylic acid copolymer, polyvinylpyrrolidone, sodium polyacrylate, propylene glycol, dipropylene glycol, polypropylene glycol, isoprene glycol, hexylene glycol, 1,3-butylene glycol, polyacrylamide, xanthan gum, guar gum, tamarind gum, carrageenan, locust bean gum, quince seed, alginic acid, pullulan, carrageenan, pectin, starches such as cationized starch, raw starch, oxidized starch, etherified starch, esterified starch and amylose, glycerin, diglycerin, polyglycerin, hyaluronic acid and metal salts of hyaluronic acid can also be used.

Further, a known pigment can be used as the spacer molecule. Examples thereof include kaolin (including clay), calcium carbonate, titanium oxide, zinc oxide, amorphous silica (including colloidal silica), aluminum oxide, zeolite, sepiolite, smectite, synthetic smectite, magnesium silicate, magnesium carbonate, magnesium oxide, diatomaceous earth, a styrene-based plastic pigment, hydrotalcite, a urea resin-based plastic pigment, and a benzoguanamine-based plastic pigment.

- pH Adjustment Step -

In the case where the substituent removal treatment step is carried out in the form of a slurry, a step of adjusting the pH of the slurry containing the ultrafine fibrous cellulose may be provided before the substituent removal treatment step. For example, when an anionic group is introduced into cellulose fibers and the counter ion of the anionic group is $Na^+$, the slurry containing ultrafine fibrous cellulose after being defibrated exhibits weak alkalinity. When heating is performed in this state, monosaccharides, which are one of coloring factors, may be generated due to decomposition of cellulose. Therefore, the pH of the slurry is preferably adjusted to 8 or less. Further, since monosaccharides may be similarly generated under an acidic condition, the pH of the slurry is preferably adjusted to 3 or more.

In addition, in a case where the ultrafine fibrous cellulose having substituents is an ultrafine fibrous cellulose having a phosphoric acid group, from the viewpoint of improving the removal efficiency of the substituents, it is preferable that the phosphorus of the phosphoric acid group is in a state of being susceptible to nucleophilic attack. The state of being susceptible to nucleophilic attack is a state with a neutralization degree of 1 represented by cellulose-O-P(= O)(-O-$H^+$)(-O-$Na^+$), and in order to achieve this state, the pH of the slurry is preferably adjusted to 3 or more and 8 or less, and more preferably adjusted to 4 or more and 6 or less.

The means for adjusting the pH is not particularly limited. For example, an acid component or an alkali component

may be added to the slurry containing ultrafine fibrous cellulose. The acid component may be any of an inorganic acid and an organic acid, and examples of the inorganic acid include sulfuric acid, hydrochloric acid, nitric acid, and phosphoric acid. Examples of the organic acid include formic acid, acetic acid, citric acid, malic acid, lactic acid, adipic acid, sebacic acid, stearic acid, maleic acid, succinic acid, tartaric acid, fumaric acid, and gluconic acid. The alkali component may be an inorganic alkali compound or an organic alkali compound. Examples of the inorganic alkali compound include lithium hydroxide, sodium hydroxide, potassium hydroxide, lithium carbonate, lithium hydrogen carbonate, potassium carbonate, potassium hydrogen carbonate, sodium carbonate, and sodium hydrogen carbonate. Examples of the organic alkali compound include ammonia, hydrazine, methylamine, ethylamine, diethylamine, triethylamine, propylamine, dipropylamine, butylamine, diaminoethane, diaminopropane, diaminobutane, diaminopentane, diaminohexane, cyclohexylamine, aniline, tetramethylammonium hydroxide, tetraethylammonium hydroxide, tetrapropylammonium hydroxide, tetrabutylammonium hydroxide, benzyltrimethylammonium hydroxide, pyridine, and N,N-dimethyl-4-aminopyridine.

In addition, in the pH adjustment step, an ion exchange treatment may be performed in order to adjust the pH. In the ion exchange treatment, a strongly acidic cation exchange resin or a weakly acidic ion exchange resin can be used. By treating with an appropriate amount of cation exchange resin for a sufficient time, a slurry containing ultrafine fibrous cellulose at the desired pH can be obtained. Further, in the pH adjustment step, the addition of an acid component or an alkali component and the ion exchange treatment may be combined.

<Salt Removal Treatment>

After the substituent removal treatment step, it is preferable to perform a treatment for removing a salt derived from the removed substituent. By removing the salt derived from the substituent, an ultrafine fibrous cellulose in which coloring can be suppressed is easily obtained. The means for removing the salt derived from the substituent is not particularly limited, and examples thereof include a washing treatment and an ion exchange treatment. The washing treatment is performed by washing the ultrafine fibrous cellulose aggregated by the substituent removal treatment with, for example, water or an organic solvent. In the ion exchange treatment, an ion exchange resin can be used.

- Step II -

In the present embodiment, the method for producing ultrafine fibrous cellulose may include a step (step I) of removing, from the ultrafine fibrous cellulose having substituents and having a fiber width of 1000 nm or less, at least a part of the substituents, and a step (step II) of performing a uniform dispersion treatment after the step I. The step of performing a uniform dispersion treatment (step II) is a step of uniformly dispersing the ultrafine fibrous cellulose obtained through the substituent removal treatment of the step I. In the step I, at least a part of the ultrafine fibrous cellulose is aggregated by subjecting the ultrafine fibrous cellulose to the substituent removal treatment. The step II is a step of uniformly dispersing the thus aggregated ultrafine fibrous cellulose. The state in which the ultrafine fibrous cellulose is uniformly dispersed in the step II refers to a state in which the fiber width of the ultrafine fibrous cellulose is 10 nm or less. As described above, the ultrafine fibrous cellulose obtained by the production method of the present embodiment has a fiber width of 10 nm or less even in a case where the amount of substituents introduced is as low as less than 0.50 mmol/g.

In the step of performing a uniform dispersion treatment (step II), for example, a high-speed defibrating apparatus, a grinder (a millstone-type crusher), a high pressure homogenizer, a high pressure collision-type crusher, a ball mill, a bead mill, a disk-type refiner, a conical refiner, a twin-screw kneader, a vibration mill, a homomixer under high-speed rotation, an ultrasonic disperser, a beater, or the like can be used. Among the above-described uniform dispersion treatment apparatuses, it is more preferable to use a high-speed defibrating apparatus or a high pressure homogenizer.

The treatment conditions in the step of performing a uniform dispersion treatment (step II) are not particularly limited, but it is preferable to increase the maximum moving speed of the ultrafine fibrous cellulose during the treatment and the pressures during the treatment. In the high-speed defibrating apparatus, the peripheral speed is preferably 20 m/sec or more, more preferably 25 m/sec or more, and still more preferably 30 m/sec or more. The high pressure homogenizer can be more preferably used than the high-speed defibrating apparatus since the maximum moving speed of the ultrafine fibrous cellulose during the treatment and the pressure during the treatment are higher. In the high pressure homogenizer treatment, the pressure during the treatment is preferably 1 MPa or more and 350 MPa or less, more preferably 10 MPa or more and 300 MPa or less, and still more preferably 50 MPa or more and 250 MPa or less.

In addition, in the step II, the above-described spacer molecule may be newly added. By adding such spacer molecules in the uniform dispersion treatment step of the step II, it is possible to more smoothly perform uniform dispersion of ultrafine fibrous cellulose. According to this, the transparency of the dispersion liquid or the sheet containing ultrafine fibrous cellulose can be more effectively enhanced.

The content of the ultrafine fibrous cellulose in the solid contents of the sheet is preferably 5% by mass or more, more preferably 10% by mass or more, still more preferably 25% by mass or more, even more preferably 50% by mass

or more, and particularly preferably 65% by mass or more, and is preferably 95% by mass or less, more preferably 90% by mass or less, still more preferably 85% by mass or less, even more preferably 80% by mass or less, and particularly preferably 75% by mass or less, from the viewpoint of obtaining transparency of the sheet, suppression of yellowing due to heating, high tensile elastic modulus, and high flexibility.

As the ultrafine fibrous cellulose, an ultrafine fibrous cellulose containing an ionic group and an unmodified ultrafine fibrous cellulose may be used in combination.

<Cellulose Derivative>

In the present invention, the sheet contains a cellulose derivative having a weight-average molecular weight of $1.0 \times 10^4$ or more and $3.0 \times 10^5$ or less in addition to the above-described ultrafine fibrous cellulose. By using a sheet that contains ultrafine fibrous cellulose and a cellulose derivative having a specific weight-average molecular weight, it is possible to obtain a sheet which has high transparency, in which yellowing due to heating is suppressed, and which has high tensile elastic modulus and excellent flexibility.

The weight-average molecular weight of the cellulose derivative is preferably $2.5 \times 10^4$ or more, more preferably $5.0 \times 10^4$ or more, and still more preferably $1.0 \times 10^5$ or more, and is preferably $2.8 \times 10^5$ or less, and more preferably $2.6 \times 10^5$ or less, from the viewpoint of stabilizing the shape as a sheet and forming the sheet while suppressing and gelation, from the viewpoint of achieving both high tensile elastic modulus and high tensile elongation, and from the viewpoint of suppressing yellowing before and after heating.

The weight-average molecular weight of the cellulose derivative is measured by a gel permeation chromatography method using a light scattering method (GPC-MALLS method).

The cellulose derivative is preferably a water-soluble cellulose ether from the viewpoint of enhancing affinity with ultrafine fibrous cellulose and from the viewpoint that the cellulose derivative can be easily added to a slurry of ultrafine fibrous cellulose (ultrafine fibrous cellulose dispersion liquid). Here, the term "water-soluble" means that 1 g or more of the cellulose derivative is dissolved in 100 g of water at 20°C.

In addition, the term "cellulose ether" is a general term for cellulose derivatives obtained by etherifying a hydroxy group of cellulose.

Preferred examples of the water-soluble cellulose ether include methyl cellulose, hydroxyethyl methyl cellulose, hydroxypropyl methyl cellulose, ethyl cellulose, hydroxyethyl cellulose, hydroxypropyl cellulose, carboxymethyl cellulose, and carboxyethyl cellulose.

In addition, from the viewpoint of suppressing yellowing of the sheet due to heating, the water-soluble cellulose is preferably a non-ionic water-soluble cellulose ether. Examples of the non-ionic water-soluble cellulose ether include methyl cellulose, hydroxyethyl methyl cellulose, hydroxypropyl methyl cellulose, ethyl cellulose, hydroxyethyl cellulose, and hydroxypropyl cellulose.

The non-ionic water-soluble cellulose ether preferably has at least one functional group selected from the group consisting of a methoxy group and a hydroxypropoxy group, more preferably is selected from the group consisting of methyl cellulose and hydroxypropyl methyl cellulose, and still more preferably is hydroxypropyl methyl cellulose.

In a case where the cellulose derivative is methyl cellulose, the degree of substitution with a methoxy group is preferably 0.5 or more, more preferably 0.8 or more, still more preferably 1.0 or more, even more preferably 1.2 or more, and particularly preferably 1.5 or more, and is preferably 3.0 or less, more preferably 2.6 or less, still more preferably 2.2 or less, and even more preferably 2.0 or less.

In a case where the cellulose derivative is hydroxypropylmethyl cellulose, the preferred range of the degree of substitution with a methoxy group is the same as the degree of substitution with a methoxy group in methyl cellulose described above. In addition, the degree of substitution with a hydroxypropoxy group is preferably 0.08 or more, more preferably 0.10 or more, still more preferably 0.12 or more, even more preferably 0.15 or more, and particularly preferably 0.18 or more, and is preferably 0.50 or less, more preferably 0.40 or less, still more preferably 0.35 or less, and even more preferably 0.30 or less.

The content of the cellulose derivative in the solid contents of the sheet is preferably 95% by mass or less, more preferably 90% by mass or less, still more preferably 75% by mass or less, even more preferably 50% by mass or less, and particularly preferably 35% by mass or less, and is preferably 5% by mass or more, more preferably 10% by mass or more, still more preferably 15% by mass or more, even more preferably 20% by mass or more, and particularly preferably 25% by mass or more, from the viewpoint of obtaining transparency of the sheet, suppression of yellowing due to heating, high tensile elastic modulus, and high flexibility.

In the present embodiment, the total content of the ultrafine fibrous cellulose and the cellulose derivative in the solid contents of the sheet is preferably 60% by mass or more, more preferably 80% by mass or more, still more preferably 90% by mass or more, and even more preferably 95% by mass or more, and is 100% by mass or less, and particularly preferably 100% by mass, from the viewpoint of obtaining transparency of the sheet, suppression of yellowing due to heating, high tensile elastic modulus, and high flexibility.

<Optional Components>

The sheet may contain optional components in addition to the ultrafine fibrous cellulose and the cellulose derivative. Examples of the optional components include a hydrophilic polymer (excluding a cellulose derivative) and a hydrophilic low molecule, a paper strengthening agent, a thermoplastic resin, a surfactant, an organic ion, a coupling agent, an inorganic layered compound, an inorganic compound, a leveling agent, an antiseptic agent, an anti-foaming agent, organic particles, a lubricant, an antistatic agent, an ultraviolet ray protective agent, a dye, a pigment, a stabilizer, magnetic powder, an alignment accelerator, a plasticizer, a dispersant, a coloring inhibitor, a polymerization inhibitor, a pH adjusting agent, and a crosslinking agent.

Examples of the hydrophilic polymer include polyethylene glycol, polyethylene oxide, polyvinyl alcohol, modified polyvinyl alcohol (such as acetoacetylated polyvinyl alcohol), polyvinyl pyrrolidone, polyvinyl methyl ether, polyacrylates, polyacrylamide, acrylic acid alkyl ester copolymers, and urethane-based copolymers. Examples of the hydrophilic low molecule include glycerin, sorbitol, and ethylene glycol. Examples of the organic ion include a tetraalkylammonium ion and a tetraalkylphosphonium ion. Examples of the tetraalkylammonium ion include a tetramethylammonium ion, a tetraethylammonium ion, a tetrapropylammonium ion, a tetrabutylammonium ion, a tetrapentylammonium ion, a tetrahexylammonium ion, a tetraheptylammonium ion, a tributylmethylammonium ion, a lauryltrimethylammonium ion, a cetyltrimethylammonium ion, a stearyltrimethylammonium ion, an octyldimethylethylammonium ion, a lauryldimethylethylammonium ion, a didecyldimethylammonium ion, a lauryldimethylbenzylammonium ion, and a tributylbenzylammonium ion. Examples of the tetraalkylphosphonium ion include a tetramethylphosphonium ion, a tetraethylphosphonium ion, a tetrapropylphosphonium ion, a tetrabutylphosphonium ion, and a lauryltrimethylphosphonium ion. In addition, as the tetrapropylonium ion and tetrabutylonium ion, a tetra-n-propylonium ion and a tetra-n-butylonium ion can also be included, respectively.

<Characteristics of Sheet>

[Yellow Index]

When the sheet of the present embodiment is heated at 160°C for 6 hours, the change in yellow index (YI value) before and after heating is preferably 5.0 or less, more preferably 4.5 or less, still more preferably 3.5 or less, even more preferably 2.5 or less, yet still more preferably 1.5 or less, yet even more preferably 1.2 or less, and further preferably 1.0 or less, and the lower limit is not particularly limited. When the change in the YI value before and after heating is within the above range, yellowing due to heating is suppressed, which is preferable.

The YI value before heating is preferably 1.2 or less, more preferably 1.0 or less, still more preferably 0.8 or less, and even more preferably 0.5 or less. The lower limit is not particularly limited.

On the other hand, the YI value after heating is preferably 5.0 or less, more preferably 4.0 or less, still more preferably 3.0 or less, even more preferably 2.5 or less, yet still more preferably 2.0 or less, and yet even more preferably 1.5 or less.

The YI value is measured in accordance with JIS K 7373:2006.

[Haze]

The sheet of the present embodiment preferably has a haze of 5% or less. The haze of 5% or less is preferable because the transparency is excellent.

The haze of the sheet is preferably 5% or less, more preferably 4% or less, still more preferably 3% or less, and even more preferably 2% or less.

The haze of the sheet is measured by a haze meter (HM-150, manufactured by Murakami Color Research Laboratory Co., Ltd.) in accordance with JIS K 7136:2000.

[Total Luminous Transmittance]

The total luminous transmittance of the sheet of the present embodiment is preferably 80% or more, more preferably 85% or more, and still more preferably 90% or more. The upper limit of the total luminous transmittance of the sheet is not particularly limited, and may be, for example, 100%. When the total luminous transmittance of the sheet is within the above range, it is preferable because it has excellent transparency.

Here, the total luminous transmittance of the sheet is a value measured using a haze meter (HM-150, manufactured by Murakami Color Research Laboratory Co., Ltd.) in accordance with, for example, JIS K 7361-1:1997.

The tensile elastic modulus of the sheet of the present embodiment is preferably 4.0 GPa or more, more preferably 5.5 GPa or more, still more preferably 6.5 GPa or more, even more preferably 7.5 GPa or more, and particularly

preferably 8.0 GPa or more, and the upper limit is not particularly limited, but is preferably 15 GPa or less, more preferably 12 GPa or less, and still more preferably 10 GPa or less, from the viewpoint of compatibility with flexibility. When the tensile elastic modulus of the sheet is within the above range, it is preferable because it has excellent rigidity.

Here, the tensile elastic modulus of the sheet is a value measured using a tensile tester TENSILON (manufactured by A&D Company, Limited) in accordance with, for example, JIS P 8113:2006. When the tensile elastic modulus is measured, a test piece for measurement is prepared by conditioning the humidity at 23°C and 50% RH for 24 hours, and the measurement is performed under the conditions of 23°C and 50% RH.

The tensile elongation of the sheet of the present embodiment is preferably 3% or more, more preferably 4% or more, still more preferably 5% or more, and even more preferably 7% or more, and the upper limit is not particularly limited, but from the viewpoint of achieving both rigidity and flexibility, it is preferably 50% or less, more preferably 40% or less, still more preferably 30% or less, and even more preferably 20% or less. When the tensile elongation is within the above range, it is preferable because it has excellent flexibility.

The tensile elongation of the sheet is a value measured using a tensile tester TENSILON (manufactured by A&D Company, Limited) in accordance with JIS K 7127:1999. When the tensile elongation is measured, a test piece for measurement is prepared by conditioning the humidity at 23°C and 50% RH for 24 hours, and the measurement is performed under the conditions of 23°C and 50% RH.

The tensile strength of the sheet of the present embodiment is preferably 60 MPa or more, more preferably 70 MPa or more, still more preferably 80 MPa or more, and even more preferably 85 MPa or more, and the upper limit is not particularly limited, but from the viewpoint of achieving both rigidity and flexibility, it is preferably 200 MPa or less, more preferably 180 MPa or less, still more preferably 160 MPa or less, and even more preferably 150 MPa or less.

The tensile strength of the sheet is a value measured using a tensile tester TENSILON (manufactured by A&D Company, Limited) in accordance with JIS K 7127:1999. When the tensile strength is measured, a test piece for measurement is prepared by conditioning the humidity at 23°C and 50% RH for 24 hours, and the measurement is performed under the conditions of 23°C and 50% RH.

The surface pH of the sheet of the present invention is preferably 5.00 or more, more preferably 5.20 or more, and still more preferably 5.40 or more. On the other hand, the surface pH of the sheet is preferably 7.0 or less. The surface pH of the sheet is a value measured by, for example, a calibrated pH meter (F-53, manufactured by HORIBA, Ltd.). The surface pH of the sheet is measured by immersing the sheet in a small amount of water and then bringing a flat type pH composite electrode (6261-10C, manufactured by HORIBA, Ltd.) into contact with the place.

[Thickness]

The thickness of the sheet of the present embodiment is not particularly limited, but is preferably 5 μm or more, more preferably 10 μm or more, and still more preferably 20 μm or more. On the other hand, the thickness of the sheet is preferably 500 μm or less, more preferably 300 μm or less, and still more preferably 200 μm or less. The thickness of the sheet is preferably adjusted as appropriate according to the intended use. The thickness of the sheet can be measured with a constant pressure thickness measuring instrument (PG-02, manufactured by TECLOCK CORPORATION). The thickness of the sheet is measured according to the following method. After humidity conditioning of a sheet cut out to a size of 50 mm square or larger at 23°C and 50% RH for 24 hours, the thicknesses at four arbitrary points are measured, and the mean value is defined as the thickness of the sheet.

[Basis Weight]

The basis weight of the sheet is preferably 10 g/m$^2$ or more, more preferably 20 g/m$^2$ or more, and still more preferably 30 g/m$^2$ or more. On the other hand, the basis weight of the sheet is not particularly limited, but is preferably 1000 g/m$^2$ or less, more preferably 500 g/m$^2$ or less, still more preferably 200 g/m$^2$ or less, and particularly preferably 100 g/m$^2$ or less.

The basis weight of the sheet is a value calculated according to the following method. Specifically, after humidity conditioning of a sheet cut out to a size of 50 mm square or larger at 23°C and 50% RH for 24 hours, the mass is measured and then divided by the area of the cut out sheet to calculate the basis weight of the sheet.

(Density)

The density of the sheet is preferably 1.00 g/cm$^3$ or more, more preferably 1.10 g/cm$^3$ or more, and still more preferably 1.20 g/cm$^3$ or more. On the other hand, the density of the sheet is not particularly limited, but is preferably 3.00 g/cm$^3$ or less, more preferably 1.70 g/cm$^3$ or less, and still more preferably 1.50 g/cm$^3$ or less. The density of the sheet is calculated by dividing the basis weight of the sheet by the thickness.

The sheet of the present embodiment is preferably not a porous sheet. That is, the void ratio and the porosity

are preferably 10% or less, more preferably 3% or less, still more preferably 1% or less, and even more preferably 0.1% or less.

[Production Method of Sheet]

A sheet containing an ultrafine fibrous cellulose having a fiber width of 10 nm or less and a cellulose derivative will be described.

In the present embodiment, the sheet can be obtained, for example, by performing a sheet-forming step described later using a liquid composition containing the above-described ultrafine fibrous cellulose, the above-described cellulose derivative, and other components.

The sheet production step preferably includes at least a coating step of coating a base material with the composition or a paper-making step of making paper from the slurry. Thus, a sheet containing ultrafine fibrous cellulose and a cellulose derivative is obtained.

- Coating Step -

In the coating step, for example, a sheet can be obtained by coating a base material with a slurry containing ultrafine fibrous cellulose and a cellulose derivative, drying the slurry to form a sheet, and peeling the sheet from the base material. Further, by using a coating apparatus and a long or continuous base material, the sheet can be continuously produced.

The quality of the base material used in the coating step is not particularly limited. A base material having high wettability with the composition (slurry) may suppress contraction and the like of the sheet during drying. However, a base material from which the sheet formed after drying can be easily peeled off is preferably selected. Among them, a resin film or plate or a metal film or plate is preferred, but not particularly limited thereto. For example, a film or a plate of a resin such as acrylic, polyethylene terephthalate, vinyl chloride, polystyrene, polypropylene, polycarbonate, or polyvinylidene chloride, a film or a plate of a metal such as aluminum, zinc, copper, or an iron plate, a film or a plate obtained by oxidizing the surface thereof, a film or a plate of stainless steel, a film or a plate of brass, or the like can be used.

In the coating step, when the viscosity of the slurry is low and the slurry spreads on the base material, a frame for damming may be used by fixing on the base material in order to obtain a sheet having a predetermined thickness and a predetermined basis weight. The frame for damming is not particularly limited, but for example, it is preferable to select a frame from which an end portion of the sheet attached after drying can be easily peeled off. From such a viewpoint, it is more preferable that the resin plate or the metal plate is molded. In the present embodiment, for example, a resin plate such as an acrylic plate, a polyethylene terephthalate plate, a vinyl chloride plate, a polystyrene plate, a polypropylene plate, a polycarbonate plate, or a polyvinylidene chloride plate, a metal plate such as an aluminum plate, a zinc plate, a copper plate, or an iron plate, a plate obtained by oxidizing the surface thereof, or a plate obtained by molding a stainless steel plate, a brass plate, or the like can be used.

The coating machine for coating the slurry on the base material is not particularly limited, and for example, a roll coater, a gravure coater, a die coater, a curtain coater, an air doctor coater, or the like can be used. Since the thickness of the sheet can be made more uniform, a die coater, a curtain coater, or a spray coater is particularly preferable.

The slurry temperature and the atmosphere temperature at the time of coating the base material with the slurry (hereinafter, the slurry temperature and the atmosphere temperature are collectively referred to as "coating temperature") are not particularly limited, but are, for example, preferably 5°C or higher and 80°C or lower, more preferably 10°C or higher and 60°C or lower, still more preferably 15°C or higher and 50°C or lower, and particularly preferably 20°C or higher and 40°C or lower. When the coating temperature is at the lower limit value or higher, the slurry can be coated more easily. When the coating temperature is at the upper limit value or lower, volatilization of the dispersion medium during coating can be suppressed.

In the coating step, the base material is preferably coated with the slurry so that the finished basis weight of the sheet and the thickness of the sheet fall within the above-described preferred ranges. By coating with the slurry so that the basis weight and the thickness are within the above-described ranges, a sheet having more excellent transparency, rigidity, and flexibility can be obtained.

As described above, the coating step includes a step of drying the slurry coated on the base material. The step of drying the slurry is not particularly limited, but is performed by, for example, a non-contact drying method, a method of drying while fixing the sheet, or a combination thereof.

The non-contact drying method is not particularly limited, but for example, a method of drying by heating with hot air, infrared rays, far infrared rays, or near infrared rays (heat drying method), or a method of drying in vacuum (vacuum drying method) can be applied. Although the heat drying method and the vacuum drying method may be combined, the heat drying method is usually applied. The drying with infrared rays, far-infrared rays or near-infrared rays is not particularly limited, but can be carried out using, for example, an infrared apparatus, a far-infrared apparatus

or a near-infrared apparatus.

The heating temperature in the heat drying method is not particularly limited, but is, for example, preferably 20°C or higher and 150°C or lower, and more preferably 25°C or higher and 105°C or lower. When the heating temperature is set to the lower limit value or higher, the dispersion medium can be rapidly volatilized. When the heating temperature is set to the upper limit value or lower, it is possible to realize suppression of the cost required for heating and suppression of discoloration of the fibrous cellulose due to heat.

- Paper Making Step -

The paper making step is performed by making a slurry with a paper machine. The paper machine used in the paper making step is not particularly limited, and examples thereof include a continuous paper machine such as a Fourdrinier type, a circular net type, and an inclined type, and a multilayer paper making machine obtained by combining these. In the paper making step, a known paper making method such as hand paper making may be adopted.

The paper making step is performed by filtering and dehydrating the slurry by a wire to obtain a sheet in a wet paper state, and then pressing and drying the sheet. A filter cloth used when filtering and dehydrating the slurry is not particularly limited, but for example, it is more preferable that the filter cloth does not allow the fibrous cellulose to pass therethrough and the filtration rate does not become too slow. Such a filter cloth is not particularly limited, but for example, a sheet, a woven fabric, or a porous film made of an organic polymer is preferable. Such an organic polymer is not particularly limited, but for example, non-cellulosic organic polymers such as polyethylene terephthalate, polyethylene, polypropylene, and polytetrafluoroethylene (PTFE) are preferable. In the present embodiment, for example, a porous film of polytetrafluoroethylene having a pore diameter of 0.1 μm or more and 20 μm or less, a woven fabric of polyethylene terephthalate or polyethylene having a pore diameter of 0.1 μm or more and 20 μm or less, and the like are mentioned.

In the paper making step, a method of producing a sheet from a slurry can be performed using a production apparatus including, for example, a water squeezing section in which a slurry containing ultrafine fibrous cellulose is discharged onto the upper surface of an endless belt and a dispersion medium is squeezed from the discharged slurry to form a web, and a drying section in which the web is dried to form a sheet. An endless belt is disposed from the water squeezing section to the drying section, and the web formed in the water squeezing section is placed on the endless belt and conveyed to the drying section.

The dehydration method used in the paper making step is not particularly limited, and examples thereof include dehydration methods commonly used in the production of paper. Among these, a method of dehydrating with a Fourdrinier wire, a circular wire, an inclined wire, or the like and then further dehydrating with a roll press is preferable. The drying method used in the paper making step is not particularly limited, and examples thereof include a method used in the production of paper. Among these, drying methods using a cylinder dryer, a Yankee dryer, hot air drying, a near-infrared heater, an infrared heater, or the like are more preferable.

The thickness, basis weight, and density of the sheet may be appropriately set according to the desired thickness, basis weight, and density of the sheet.

[Layered Body]

The present invention may relate to a layered body having a structure in which other layer is further stacked on the above-described sheet. Such other layer may be provided on both surfaces of the sheet, or may be provided only on one surface of the sheet. Examples of the other layer stacked on at least one surface of the sheet include a resin layer and an inorganic layer, and the resin layer is preferable. In addition, a layered body may be formed by further stacking other layer on a surface of the resin layer which is not in contact with the sheet. Examples of the other layer include a polyethylene film, a polypropylene film, a cycloolefin polymer film, and a polyimide film.

The thickness of the other layer in the layered body is not particularly limited, but is preferably 20 μm or more, more preferably 50 μm or more, and still more preferably 100 μm or more. On the other hand, the thickness is preferably 5000 μm or less, more preferably 1000 μm or less, and still more preferably 500 μm or less. However, for example, in a case where the resin layer is a coating layer formed by coating, the thickness of the resin layer may be 1 μm or more, may be 2 μm or more, or may be 3 μm or more, and the thickness of the resin layer is preferably 30 μm or less, more preferably 20 μm or less, and still more preferably 10 μm or less.

<Resin Layer>

The resin layer is a layer containing a natural resin or a synthetic resin as a main component. Here, the main component refers to a component contained in an amount of 50% by mass or more with respect to the total mass of the resin layer. The content of the resin is preferably 60% by mass or more, more preferably 70% by mass or more, still more preferably 80% by mass or more, and particularly preferably 90% by mass or more with respect to the total mass

of the resin layer. The content of the resin may be 100% by mass, and may be 95% by mass or less.

Examples of the natural resin include rosin-based resins such as rosin, rosin esters, and hydrogenated rosin esters.

The synthetic resin is preferably at least one selected from, for example, a polycarbonate resin, a polyethylene terephthalate resin, a polyethylene naphthalate resin, a polyethylene resin, a polypropylene resin, a polyimide resin, a polystyrene resin, and an acrylic resin. Among them, the synthetic resin is preferably at least one selected from a polycarbonate resin, an acrylic resin, and a polypropylene resin, and more preferably a polycarbonate resin.

Examples of the polycarbonate resin constituting the resin layer include an aromatic polycarbonate resin and an aliphatic polycarbonate resin. These specific polycarbonate resins are known, and examples thereof include the polycarbonate resin described in JP 2010-023275 A.

Examples of the polypropylene resin constituting the resin layer include an acidmodified polypropylene resin and a chlorinated polypropylene resin. Among these, an acidmodified polypropylene resin is preferable, and a maleated polypropylene resin or a maleic anhydride-modified polypropylene resin is more preferable.

As the resin constituting the resin layer, one type may be used alone, or a copolymer obtained by copolymerization or graft polymerization of a plurality of resin components may be used. In addition, a blend material obtained by mixing a plurality of resin components by a physical process may be used.

An adhesive layer may be provided between the sheet and the resin layer, or the sheet and the resin layer may be directly adhered to each other without providing the adhesive layer. When the adhesive layer is provided between the sheet and the resin layer, for example, an acrylic resin can be used as an adhesive constituting the adhesive layer. Examples of the adhesive other than the acrylic resin include a vinyl chloride resin, a (meth)acrylic ester resin, a styrene/acrylic ester copolymer resin, a vinyl acetate resin, a vinyl acetate/(meth)acrylic ester copolymer resin, a urethane resin, a silicone resin, an epoxy resin, an ethylene/vinyl acetate copolymer resin, a polyester-based resin, a polyvinyl alcohol resin, an ethylene vinyl alcohol copolymer resin, and a rubber-based emulsion such as SBR or NBR.

When the adhesive layer is not provided between the sheet and the resin layer, the resin layer may contain an adhesion aid, and the surface of the resin layer may be subjected to a surface treatment such as a hydrophilization treatment.

Examples of the adhesion aid include a compound containing at least one selected from an isocyanate group, a carbodiimide group, an epoxy group, an oxazoline group, an amino group, and a silanol group, and an organosilicon compound. Among them, the adhesion aid is preferably at least one selected from a compound containing an isocyanate group (isocyanate compound) and an organosilicon compound. Examples of the organosilicon compound include a silane coupling agent condensate and a silane coupling agent.

Examples of the surface treatment method include corona treatment, plasma discharge treatment, UV irradiation treatment, electron beam irradiation treatment, and flame treatment.

<Inorganic Layer>

A substance constituting the inorganic layer is not particularly limited, and examples thereof include aluminum, silicon, magnesium, zinc, tin, nickel, and titanium; oxides, carbides, nitrides, oxycarbides, oxynitrides, and oxycarbonitrides thereof; and mixtures thereof. From the viewpoint that high moisture resistance can be stably maintained, silicon oxide, silicon nitride, silicon oxycarbide, silicon oxynitride, silicon oxycarbonitride, aluminum oxide, aluminum nitride, aluminum oxycarbide, aluminum oxynitride, or mixtures thereof are preferable.

The method for forming the inorganic layer is not particularly limited. In general, methods for forming a thin film are roughly divided into a chemical vapor deposition (CVD) method and a physical vapor deposition (PVD) method, but any method may be adopted. Specific examples of the CVD method include plasma CVD using plasma and catalytic chemical vapor deposition (Cat-CVD) method in which a material gas is subjected to catalytic thermal decomposition using a heated catalyst. Specific examples of the PVD method include vacuum deposition, ion plating, and sputtering.

In addition, as a method for forming the inorganic layer, an atomic layer deposition (ALD) method may be adopted. The ALD method is a method of forming a thin film in an atomic layer unit by alternately supplying a source gas of each element constituting a film to be formed to a surface on which a layer is to be formed. Although there is a disadvantage that the deposition rate is low, there is an advantage that even a surface having a complicated shape can be neatly covered and a thin film with less defects can be formed as compared with the plasma CVD method. In addition, the ALD method has advantages that the film thickness can be controlled in the order of nanometers and a wide surface can be covered relatively easily. Further, in the ALD method, improvement in reaction rate, a low-temperature process, and reduction in unreacted gas can be expected by using plasma.

<Use of Sheet>

The sheet of the present embodiment is suitable for optical members such as various display devices and

various solar batteries. The sheet is also suitable for uses such as substrates of electronic devices, separators for electrochemical devices, members of home appliances, window materials, interior materials, exterior materials, and packaging materials of various vehicles and buildings. Furthermore, the sheet is also suitable for uses such as threads, filters, fabrics, cushioning materials, sponges, and abrasives, as well as uses in which the sheet itself is used as a reinforcing material.

In addition, the sheet of the present invention is suitable for uses such as a foodstuff container such as plates, cups, and trays, a cutlery such as knives, spoons, and forks, and a straw.

The sheet of the present embodiment has suppressed transparency and yellowing due to heating, and is suitable for use in optical members in which transparency and yellowing are problematic. Further, since it is excellent in tensile elastic modulus and tensile elongation, it is also suitable for various molded products such as a foodstuff container, a cutlery, a straw, and the like, which have been difficult to apply due to cracking during processing.

In addition, in the above-described applications, the sheet itself may be used, or a layered body in which a resin layer or an inorganic layer is stacked on the sheet may be used.

## Examples

Hereinafter, the features of the present invention will be described more specifically with reference to Examples and Comparative Examples. Materials, use amounts, ratios, treatment contents, treatment procedures, and the like shown in the following Examples can be appropriately changed without departing from the gist of the present invention. Therefore, the scope of the present invention should not be construed as being limited to the specific examples shown below.

<Production Example 1>

[Phosphorylation Treatment]

As raw material pulp, broad-leaved tree dissolving pulp (dry sheet) manufactured by Oji Paper Co., Ltd. was used. On the raw material pulp, a phosphorylation treatment was performed as follows. First, a mixed aqueous solution of ammonium dihydrogen phosphate and urea was added to 100 parts by mass (absolute dry mass) of the raw material pulp, and the mixture was adjusted to contain 45 parts by mass of ammonium dihydrogen phosphate, 120 parts by mass of urea, and 150 parts by mass of water. Thus, chemical-impregnated pulp was obtained. Next, the obtained chemical-impregnated pulp was heated by a hot air dryer of 165°C for 250 seconds, and a phosphoric acid group was introduced into cellulose in the pulp to obtain phosphorylated pulp.

[Washing Treatment]

Next, a washing treatment was performed on the obtained phosphorylated pulp. The washing treatment was performed by pouring 10 L of ion-exchanged water into 100 g (absolute dry mass) of the phosphorylated pulp to obtain a pulp dispersion liquid, stirring the pulp dispersion liquid such that the pulp was uniformly dispersed, and then repeating the operation of filtering and dehydration. The point in time when the electrical conductivity of the filtrate reached 100 μS/cm or less was set as the end point of washing.

[Neutralization Treatment]

Next, a neutralization treatment was performed on the washed phosphorylated pulp in the following manner. First, the washed phosphorylated pulp was diluted with 10 L of ion-exchanged water, and then was stirred while a 1 N sodium hydroxide aqueous solution was added thereto little by little so as to obtain a phosphorylated pulp slurry with a pH of 12 or more and 13 or less. Next, the corresponding phosphorylated pulp slurry was dehydrated to obtain neutralized phosphorylated pulp. Then, the washing treatment was performed on the neutralized phosphorylated pulp.

[Nitrogen Removal Treatment]

Ion-exchanged water was added to the phosphorylated pulp to prepare a slurry with a solid content concentration of 4% by mass. A 48% by mass aqueous solution of sodium hydroxide was added to the slurry to adjust the pH to 13.4, and the slurry was heated at a liquid temperature of 85°C for 1 hour. Thereafter, the pulp slurry was dehydrated, and 10 L of ion-exchanged water was poured into 100 g (absolute dry mass) of the phosphorylated pulp to obtain a pulp dispersion liquid. The pulp dispersion liquid was stirred so that the pulp was uniformly dispersed, and the operation of filtering and dehydration was repeated to remove excess sodium hydroxide. The point in time when the electrical conductivity of the filtrate reached 100 μS/cm or less was set as the end point of removal. The introduction amount of the carbamide group obtained from the amount of nitrogen measured by a measurement method to be described later was 0.01 mmol/g.

On the pulp obtained through the phosphorus oxo acid treatment obtained in this manner, an infrared absorption spectrum was measured by using FT-IR. As a result, absorption based on P=O of a phosphoric acid group was observed around 1230 $cm^{-1}$, and then it was confirmed that the phosphoric acid group was added to the pulp. In addition, the obtained phosphorylated pulp was provided, and analyzed by an X-ray diffraction device, and as a result, typical peaks were confirmed at two positions around $2\theta$ = 14° or more and 17° or less and around $2\theta$ = 22° or more and 23° or less, and it was confirmed that cellulose I-type crystals were maintained. The amount of phosphoric acid groups (first dissociated acid amount), which was measured by a measurement method to be described later, was 1.45 mmol/g. The total dissociated acid amount was 2.45 mmol/g.

[Defibration Treatment]

Ion-exchanged water was added to the obtained phosphorylated pulp to prepare a slurry with a solid content concentration of 2% by mass. This slurry was treated six times with a wet pulverizing device (STAR BURST, manufactured by Sugino Machine Limited) at a pressure of 200 MPa, to obtain an ultrafine fibrous cellulose dispersion liquid containing ultrafine fibrous cellulose.

[Substituent Removal Treatment (High Temperature Heat Treatment)]

The ultrafine fibrous cellulose dispersion liquid was placed in a pressure-resistant container and heated at a liquid temperature of 160°C for 15 minutes until the amount of phosphoric acid groups reached 0.08 mmol/g. The formation of ultrafine fibrous cellulose aggregate was confirmed by this operation.

[Washing Treatment of Slurry after Removal of Substituent]

Ion-exchanged water in the same amount as the slurry was added to the heated slurry to prepare a slurry having a solid content concentration of about 1% by mass, and the washing treatment of the slurry was performed by stirring the slurry and then repeating the operation of filtering and dehydration. When the electrical conductivity of the filtrate reached 10 μS/cm or less, ion-exchanged water was added again to obtain a slurry of about 1% by mass, and the slurry was allowed to stand for 24 hours. Thereafter, the operation of filtering and dehydration was further repeated, and the point in time when the electrical conductivity of the filtrate reached 10 μS/cm or less was set as the end point of washing. Ion-exchanged water was added to the obtained ultrafine fibrous cellulose aggregate, and then a slurry after the removal of substituent was obtained. The solid content concentration of this slurry was 1.7% by mass.

[Uniform Dispersion of Slurry after Removal of Substituent]

Ion-exchanged water was added to the resulting slurry after the removal of substituent to obtain a slurry having a solid content concentration of 1.0% by mass, and then the slurry was treated three times with a wet pulverizing device (STAR BURST, manufactured by Sugino Machine Limited) at a pressure of 200 MPa, thereby obtaining a substituent-removed ultrafine fibrous cellulose dispersion liquid (A) containing substituent-removed ultrafine fibrous cellulose. Further, when the fiber width of the ultrafine fibrous cellulose was measured using a transmission type electron microscope, it was found to be 4 nm.

<Production Example 2>

The phosphorylated pulp obtained in Production Example 1 after the washing treatment and the neutralization treatment was subjected to the following treatment to obtain an ultrafine fibrous cellulose dispersion liquid (B) containing ultrafine fibrous cellulose.

[Defibration Treatment]

Ion-exchanged water was added to the obtained phosphorylated pulp to prepare a slurry with a solid content concentration of 2% by mass. This slurry was treated six times with a wet pulverizing device (STAR BURST, manufactured by Sugino Machine Limited) at a pressure of 200 MPa, to obtain an ultrafine fibrous cellulose dispersion liquid containing ultrafine fibrous cellulose. Through X-ray diffraction, it was confirmed that the ultrafine fibrous cellulose maintained the cellulose I-type crystals. Further, when the fiber width of the ultrafine fibrous cellulose was measured using a transmission

type electron microscope, it was found to be 3 to 5 nm. The amount of phosphoric acid groups (first dissociated amount) measured by the measurement method described in Measurement of Amount of Phosphorus Oxo Acid Group to be described later was 1.45 mmol/g. The total dissociated acid amount was 2.45 mmol/g.

<Production Example 3>

[Phosphited Treatment]

A phosphited pulp was obtained in the same manner as in Production Example 2, except that 33 parts by mass of phosphorous acid (phosphonic acid) was used instead of ammonium dihydrogen phosphate in the phosphorylation treatment.

On the phosphited pulp obtained in this manner, an infrared absorption spectrum was measured by using FT-IR. As a result, absorption based on P=O of a phosphonate group as a tautomer of the phosphorous acid group was observed around 1210 $cm^{-1}$, and then it was confirmed that the phosphorous acid group (phosphonate group) was added to the pulp. In addition, the obtained phosphited pulp was provided, and analyzed by an X-ray diffraction device, and as a result, typical peaks were confirmed at two positions around $2\theta$ = 14° or more and 17° or less and around $2\theta$ = 22° or more and 23° or less, and it was confirmed that cellulose I-type crystals were included.

[Defibration Treatment]

Ion-exchanged water was added to the obtained phosphited pulp to prepare a slurry with a solid content concentration of 2% by mass. This slurry was treated six times with a wet pulverizing device (STAR BURST, manufactured by Sugino Machine Limited) at a pressure of 200 MPa, to obtain an ultrafine fibrous cellulose dispersion liquid (C) containing ultrafine fibrous cellulose. Through X-ray diffraction, it was confirmed that the ultrafine fibrous cellulose maintained the cellulose I-type crystals. Further, when the fiber width of the ultrafine fibrous cellulose was measured using a transmission type electron microscope, it was found to be 3 to 5 nm. The amount of phosphorous acid groups (first dissociated acid amount) measured by the method for measuring the amount of phosphorus oxo acid groups to be described later was 1.51 mmol/g. The total dissociated acid amount was 1.54 mmol/g.

<Production Example 4>

[TEMPO Oxidation Treatment]

As raw material pulp, broad-leaved tree dissolving pulp (dry sheet) manufactured by Oji Paper Co., Ltd. was used. On the raw material pulp, an alkalie TEMPO oxidation treatment was performed as follows.

First, 100 parts by mass (dry mass) of the above raw material pulp, 1.6 parts by mass of TEMPO (2,2,6,6-tetramethylpiperidine-1-oxyl) and 10 parts by mass of sodium bromide were dispersed in 10,000 parts by mass of water. Then, a 13% by mass sodium hypochlorite aqueous solution was added to make 3.8 mmol for 1.0 g of pulp to start the reaction. During the reaction, a 0.5 M sodium hydroxide aqueous solution was added dropwise to maintain the pH at 10 or more and 10.5 or less, and the reaction was considered to be completed when no change in pH was observed.

[Washing Treatment]

Next, a washing treatment was performed on the obtained TEMPO-oxidized pulp. The washing treatment was performed by dehydrating the pulp slurry after the TEMPO oxidation to obtain a dehydrated sheet, pouring 5,000 parts by mass of ion-exchanged water into the dehydrated sheet, stirring and uniformly dispersing the pulp, and then repeating the operation of filtering and dehydration. The point in time when the electrical conductivity of the filtrate reached 100 μS/cm or less was set as the end point of washing.

[Additional Oxidation Treatment]

This dehydrated sheet was subjected to an additional oxidation treatment of remaining aldehyde groups as follows. The above dehydrated sheet equivalent to 100 parts by mass (dry mass) was dispersed in 10,000 parts by mass of a 0.1 mol/L acetic acid buffer solution (pH 4.8). Next, 113 parts by mass of 80% sodium chlorite was added and immediately sealed, and the reaction was performed at room temperature for 48 hours under stirring at 500 rpm using a magnetic stirrer, thereby obtaining a pulp slurry.

[Washing Treatment]

Next, a washing treatment was performed on the obtained additionally oxidized TEMPO-oxidized pulp. The washing treatment was performed by dehydrating the pulp slurry after the additional oxidation to obtain a dehydrated sheet, pouring 5,000 parts by mass of ion-exchanged water into the dehydrated sheet, stirring and uniformly dispersing the pulp, and then repeating the operation of filtering and dehydration. The point in time when the electrical conductivity of the filtrate reached 100 $\mu$S/cm or less was set as the end point of washing.

With respect to the TEMPO-oxidized pulp thus obtained, the amount of carboxy groups measured by the measurement method to be described later was 1.30 mmol/g. In addition, the obtained TEMPO-oxidized pulp was provided, and analyzed by an X-ray diffraction device, and as a result, typical peaks were confirmed at two positions around $2\theta$ = 14° or more and 17° or less and around $2\theta$ = 22° or more and 23° or less, and it was confirmed that cellulose I-type crystals were included.

[Defibration Treatment]

Ion-exchanged water was added to the obtained TEMPO-oxidized pulp to prepare a slurry with a solid content concentration of 2% by mass. This slurry was treated six times with a wet pulverizing device (STAR BURST, manufactured by Sugino Machine Limited) at a pressure of 200 MPa, to obtain an ultrafine fibrous cellulose dispersion liquid (D) containing ultrafine fibrous cellulose. Through X-ray diffraction, it was confirmed that the ultrafine fibrous cellulose maintained the cellulose I-type crystals. Further, when the fiber width of the ultrafine fibrous cellulose was measured using a transmission type electron microscope, it was found to be 3 to 5 nm. The amount of carboxy groups measured by the measurement method to be described later was 1.30 mmol/g.

<Production Example 5>

[Sulfur Oxo Oxidation Treatment]

A sulfated pulp was obtained in the same manner as in Production Example 1, except that 38 parts by mass of amidosulfuric acid was used instead of ammonium dihydrogen phosphate. However, the heating time by the hot air dryer was 20 minutes.

On the sulfated pulp obtained in this manner, an infrared absorption spectrum was measured by using FT-IR. As a result, absorption based on a sulfate group was observed around 1220 to 1260 $cm^{-1}$, and then it was confirmed that the sulfate group was added to the pulp.

[Defibration Treatment]

Ion-exchanged water was added to the obtained sulfated pulp, which was then stirred to form a 2% by mass slurry. This slurry was treated six times with a wet pulverizing device (STAR BURST, manufactured by Sugino Machine Limited) at a pressure of 200 MPa, to obtain an ultrafine fibrous cellulose dispersion liquid (E) containing ultrafine fibrous cellulose. Through X-ray diffraction, it was confirmed that the ultrafine fibrous cellulose maintained the cellulose I-type crystals. In addition, when the fiber width of the ultrafine fibrous cellulose was measured by using a transmission type electron microscope, it was found to be 2 to 5 nm. The amount of sulfate groups measured by the method for measuring the amount of sulfur oxo acid groups to be described later was 1.47 mmol/g.

<Measurement>

[Measurement of Amount of Phosphorus Oxo Acid Group]

The amount of phosphorus oxo acid groups in ultrafine fibrous cellulose (equal to the amount of phosphorus oxo acid groups in pulp obtained through the phosphorus oxo acid treatment) was measured by adding ion-exchanged water to an ultrafine fibrous cellulose dispersion liquid containing the target ultrafine fibrous cellulose to adjust the content to 0.2% by mass, treating with an ion exchange resin, and then performing titration using alkali.

The treatment with the ion-exchange resin was performed by adding a strong acid ion-exchange resin (Amberjet 1024; manufactured by ORGANO CORPORATION, conditioned) with a volume of 1/10 to the ultrafine fibrous cellulose-containing slurry, performing shaking for 1 hour, and separating the resin from the slurry through pouring on a mesh with a mesh size of 90 $\mu$m.

In addition, the titration using alkali was performed by measuring the change in a pH value indicated by the slurry while adding 10 $\mu$L of a 0.1 N sodium hydroxide aqueous solution every 5 seconds to the ultrafine fibrous cellulose-containing slurry that had been subjected to the treatment with the ion-exchange resin. The titration was performed while blowing nitrogen gas to the slurry from 15 minutes before the start of titration. In this neutralization titration, on the curve plotting the measured pH relative to the addition amount of alkali, two points at which the increment (a differential value of pH relative to a dropping amount of alkali) is maximized are observed. Between these, a firstly obtained maximum point of the increment when addition of alkali is initiated is called a first end point, and a secondly obtained maximum point of the increment is called a second end point (Fig. 1). The amount of required alkali from the start of titration to the first end point is equal to a first dissociated acid amount in the slurry used for the titration. In addition, the amount of required alkali from the start of titration to the second end point is equal to the total dissociated acid amount in the slurry used for the titration. A value obtained by dividing the amount (mmol) of required alkali from the start of titration to the first end point by the solid content (g) in the slurry as a titration target was set as the amount of phosphorus oxo acid groups (the first dissociated acid amount) (mmol/g). In addition, a value obtained by dividing the amount (mmol) of required alkali from the start of titration to the second end point by the solid content (g) in the slurry as the titration target was set as the total dissociated acid amount (mmol/g).

[Measurement of Amount of Carboxy Groups]

The amount of carboxy groups in ultrafine fibrous cellulose (equal to the amount of carboxy groups in TEMPO-oxidized pulp) was measured by adding ion-exchanged water to an ultrafine fibrous cellulose dispersion liquid containing the target ultrafine fibrous cellulose to adjust the content to 0.2% by mass, treating with an ion exchange resin, and then performing titration using alkali.

The treatment with the ion-exchange resin was performed by adding a strong acid ion-exchange resin (Amberjet 1024; manufactured by ORGANO CORPORATION, conditioned) with a volume of 1/10 to the ultrafine fibrous cellulose-containing slurry of 0.2% by mass, performing shaking for 1 hour, and separating the resin from the slurry through pouring on a mesh with a mesh size of 90 μm.

In addition, the titration using alkali was performed by measuring the change in a pH value indicated by the slurry while adding a 0.1 N sodium hydroxide aqueous solution to the fibrous cellulose-containing slurry that had been subjected to the treatment with the ion-exchange resin. When the change in pH is observed while a sodium hydroxide aqueous solution is added, a titration curve illustrated in Fig. 2 is obtained. As illustrated in Fig. 2, in this neutralization titration, on the curve plotting the measured pH relative to the addition amount of alkali, one point at which the increment (a differential value of pH relative to a dropping amount of alkali) is maximized is observed. This maximum point of the increment is called a first end point. Here, in Fig. 2, a region from the start of titration to the first end point is called a first region. The amount of alkali required for the first region is equal to the amount of carboxy groups in the slurry used for titration. Then, an introduction amount (mmol/g) of the carboxy groups was calculated by dividing the amount (mmol) of alkali required for the first region on the titration curve by the solid content (g) in the ultrafine fibrous cellulose-containing slurry as a titration target.

The above-described introduction amount (mmol/g) of the carboxy groups indicates the amount of substituents (hereinafter, referred to as the amount of carboxy groups (acid type)) per 1 g of the mass of the fibrous cellulose when the counter ion of the carboxy group is a hydrogen ion ($H^+$).

[Measurement of Amount of Sulfur Oxo Acid Groups]

The fibrous cellulose thus obtained was wet ashed using perchloric acid and concentrated nitric acid, then diluted at an appropriate magnification, and the amount of sulfur was measured by ICP emission spectrometry. The value obtained by dividing the amount of sulfur by the absolute dry mass of the tested fibrous cellulose was defined as the amount of sulfur oxo acid groups (unit: mmol/g).

[Measurement on Amount of Carbamide Groups]

The amount of carbamide groups in ultrafine fibrous cellulose was measured by subjecting a sample after freeze drying and pulverization treatment to a trace total nitrogen analyzer TN-110 manufactured by Mitsubishi Chemical Analytech Co., Ltd. The ionic nitrogen was removed during the neutralization treatment and the washing treatment. The introduction amount (mmol/g) of the carbamide group per unit mass of the ultrafine fibrous cellulose was calculated by dividing the nitrogen content (g/g) per unit mass of the ultrafine fibrous cellulose obtained by the trace nitrogen analysis by the atomic weight of nitrogen.

<Example 1>

[Dissolution of Cellulose Ether]

Methyl cellulose (METOLOSE SM-25, manufactured by Shin-Etsu Chemical Co., Ltd., weight-average molecular weight: $6.0 \times 10^4$, degree of substitution (methoxy group): 1.8) was added to ion-exchanged water so as to be 2% by mass, and the mixture was stirred at room temperature for 1 hour to be dissolved. Through the above procedure, a cellulose ether aqueous solution (A) was obtained.

[Production of Sheet]

The ultrafine fibrous cellulose dispersion liquid (A) and the cellulose ether aqueous solution (A) were diluted with ion-exchanged water so that the respective solid content concentrations were 0.5% by mass. Then, 30 parts by mass of the diluted cellulose ether aqueous solution was mixed with 70 parts by mass of the diluted ultrafine fibrous cellulose dispersion liquid to obtain a liquid mixture.

Furthermore, the liquid mixture was weighed so that the finished basis weight of the sheet was 32 g/m$^2$, and was developed on a commercially available acrylic plate. A frame for damming (250 mm $\times$ 250 mm in inner dimension and 5 cm in height) was placed on the acrylic plate so as to have a predetermined basis weight. Thereafter, the frame was dried for 1 hour in a dryer at 100°C, and was peeled off from the acrylic plate, thereby obtaining an ultrafine fibrous cellulose-containing sheet. The thickness of the sheet was 25 $\mu$m.

<Example 2>

A cellulose ether aqueous solution (B) was obtained by dissolving methylcellulose (METOLOSE SM-400, manufactured by Shin-Etsu Chemical Co., Ltd., weight-average molecular weight: $1.4 \times 10^5$, degree of substitution (methoxy group): 1.8) in [Dissolution of Cellulose Ether] of Example 1. An ultrafine fibrous cellulose-containing sheet was obtained in the same manner as in Example 1 except for the above.

<Example 3>

A cellulose ether aqueous solution (D) was obtained by dissolving hydroxypropyl methylcellulose (METOLOSE 65SH-50, manufactured by Shin-Etsu Chemical Co., Ltd., weight-average molecular weight: $7.5 \times 10^4$, degree of substitution (methoxy group): 1.8, number of moles of substitution (hydroxypropoxy group): 0.15) in [Dissolution of Cellulose Ether] of Example 1. An ultrafine fibrous cellulose-containing sheet was obtained in the same manner as in Example 1 except for the above.

<Example 4>

A cellulose ether aqueous solution (E) was obtained by dissolving hydroxypropyl methylcellulose (METOLOSE 65SH-400, manufactured by Shin-Etsu Chemical Co., Ltd., weight-average molecular weight: $1.4 \times 10^5$, degree of substitution (methoxy group): 1.8, number of moles of substitution (hydroxypropoxy group): 0.15) in [Dissolution of Cellulose Ether] of Example 1. An ultrafine fibrous cellulose-containing sheet was obtained in the same manner as in Example 1 except for the above.

<Example 5>

A cellulose ether aqueous solution (F) was obtained by dissolving hydroxypropyl methylcellulose (METOLOSE 65SH-1500, manufactured by Shin-Etsu Chemical Co., Ltd., weight-average molecular weight: $2.2 \times 10^5$, degree of substitution (methoxy group): 1.8, number of moles of substitution (hydroxypropoxy group): 0.15) in [Dissolution of Cellulose Ether] of Example 1. An ultrafine fibrous cellulose-containing sheet was obtained in the same manner as in Example 1 except for the above.

<Example 6>

An ultrafine fibrous cellulose-containing sheet was obtained in the same manner as in Example 5 except that the mixing amount of the diluted ultrafine fibrous cellulose dispersion liquid (A) was changed to 50 parts by mass and the mixing amount of the diluted cellulose ether aqueous solution (F) was changed to 50 parts by mass.

<Example 7>

An ultrafine fibrous cellulose-containing sheet was obtained in the same manner as in Example 5 except that the mixing amount of the diluted ultrafine fibrous cellulose dispersion liquid (A) was changed to 30 parts by mass and the mixing amount of the diluted cellulose ether aqueous solution (F) was changed to 70 parts by mass.

<Example 8>

An ultrafine fibrous cellulose-containing sheet was obtained in the same manner as in Example 5 except that the mixing amount of the diluted ultrafine fibrous cellulose dispersion liquid (A) was changed to 10 parts by mass and the mixing amount of the diluted cellulose ether aqueous solution (F) was changed to 90 parts by mass.

<Example 9>

An ultrafine fibrous cellulose-containing sheet having a thickness of 150 μm was obtained in the same manner as in Example 5 except that the finished basis weight was changed to 180 g/$m^2$.

<Example 10>

An ultrafine fibrous cellulose-containing sheet having a thickness of 150 μm was obtained in the same manner as in Example 6 except that the finished basis weight was changed to 180 g/$m^2$.

<Example 11>

An ultrafine fibrous cellulose-containing sheet was obtained in the same manner as in Example 5 except that the ultrafine fibrous cellulose dispersion liquid (B) was used.

<Example 12>

An ultrafine fibrous cellulose-containing sheet was obtained in the same manner as in Example 6 except that the ultrafine fibrous cellulose dispersion liquid (B) was used.

<Example 13>

An ultrafine fibrous cellulose-containing sheet was obtained in the same manner as in Example 5 except that the ultrafine fibrous cellulose dispersion liquid (C) was used.

<Example 14>

An ultrafine fibrous cellulose-containing sheet was obtained in the same manner as in Example 5 except that the ultrafine fibrous cellulose dispersion liquid (D) was used.

<Example 15>

An ultrafine fibrous cellulose-containing sheet was obtained in the same manner as in Example 5 except that the ultrafine fibrous cellulose dispersion liquid (E) was used.

<Example 16>

A layered body was obtained by stacking resin layers on both surfaces of the ultrafine fibrous cellulose-containing sheet in the same manner as in Example 9, except that the following treatments were performed on the ultrafine fibrous cellulose-containing sheet obtained in Example 9.

[Formation of Resin Layer]

8.5 parts by mass of modified polycarbonate resin (Iupizeta FPC-2136, manufactured by Mitsubishi Gas Chemical Company, Inc.), 60 parts by mass of toluene, and 30 parts by mass of methyl ethyl ketone were mixed to obtain a resin coating liquid. Then, 1.5 parts by mass of an isocyanate compound (DURANATE TPA-100, manufactured by Asahi

Kasei Corporation) as an adhesion aid was added to the resin coating liquid and mixed. This resin coating liquid was applied to one surface of the ultrafine fibrous cellulose-containing sheet (the surface that was in contact with the acrylic plate) with a bar coater. Thereafter, the sheet was heated at 100°C for 1 hour to cure the resin coating liquid, thereby forming a resin layer. Then, a resin layer was formed on the opposite surface of the ultrafine fibrous cellulose by the same procedure to obtain a layered body. The thickness of the resin layer was 3 μm on one surface.

<Comparative Example 1>

A cellulose ether aqueous solution (C) was obtained by dissolving methylcellulose (METOLOSE SM-8000, manufactured by Shin-Etsu Chemical Co., Ltd., weight-average molecular weight: $3.6 \times 10^5$, degree of substitution (methoxy group): 1.8) in [Dissolution of Cellulose Ether] of Example 1. An ultrafine fibrous cellulose-containing sheet was obtained in the same manner as in Example 1 except for the above.

<Comparative Example 2>

A cellulose ether aqueous solution (G) was obtained by dissolving hydroxypropyl methylcellulose (METOLOSE 65SH-15000, manufactured by Shin-Etsu Chemical Co., Ltd., weight-average molecular weight: $4.3 \times 10^5$, degree of substitution (methoxy group): 1.8, number of moles of substitution (hydroxypropoxy group): 0.15) in [Dissolution of Cellulose Ether] of Example 1. An ultrafine fibrous cellulose-containing sheet was obtained in the same manner as in Example 1 except for the above.

<Comparative Example 3>

An ultrafine fibrous cellulose-containing sheet was obtained in the same manner as in Example 1 except that [Dissolution of Cellulose Ether] was changed as follows.

[Dissolution of Polyvinyl Alcohol]

Polyvinyl alcohol (Poval 5-74LLA, manufactured by Kuraray Co., Ltd., polymerization degree: 500, saponification degree: 74 mol%) was added to ion-exchanged water so as to be 12% by mass, and the mixture was stirred at 95°C for 1 hour to dissolve the polyvinyl alcohol. By the above procedure, a polyvinyl alcohol aqueous solution (A) was obtained.

<Comparative Example 4>

An ultrafine fibrous cellulose-containing sheet was obtained in the same manner as in Example 1 except that [Dissolution of Cellulose Ether] was changed as follows.

[Dissolution of Polyvinyl Alcohol]

Polyvinyl alcohol (Poval 5-98, manufactured by Kuraray Co., Ltd., polymerization degree: 500, saponification degree: 99 mol%) was added to ion-exchanged water so as to be 12% by mass, and the mixture was stirred at 95°C for 1 hour to dissolve the polyvinyl alcohol. By the above procedure, a polyvinyl alcohol aqueous solution (B) was obtained.

<Comparative Example 5>

An ultrafine fibrous cellulose-containing sheet was obtained in the same manner as in Example 1 except that [Dissolution of Cellulose Ether] was changed as follows.

[Dissolution of Polyethylene Oxide]

Polyethylene oxide (PEO-18, manufactured by Sumitomo Seika Chemicals Co., Ltd., viscosity-average molecular weight: $4.3 \times 10^6$) was added to ion-exchanged water so as to be 2% by mass, and the mixture was stirred at room temperature for 1 hour to dissolve the polyethylene oxide. By the above procedure, a polyethylene oxide aqueous solution was obtained.

<Comparative Example 6>

An ultrafine fibrous cellulose-containing sheet was obtained in the same manner as in Example 11 except that

[Dissolution of Cellulose Ether] was changed as follows.

[Dissolution of Polyvinyl Alcohol]

Polyvinyl alcohol (Poval 5-98, manufactured by Kuraray Co., Ltd., polymerization degree: 500, saponification degree: 99 mol%) was added to ion-exchanged water so as to be 12% by mass, and the mixture was stirred at 95°C for 1 hour to dissolve the polyvinyl alcohol. By the above procedure, a polyvinyl alcohol aqueous solution (B) was obtained.

<Evaluation>

[Total Luminous Transmittance Measurement of Sheet]

In accordance with JIS K 7361-1:1997, the total luminous transmittance of the sheet was measured using a haze meter (HM-150, manufactured by Murakami Color Research Laboratory Co., Ltd.).

[Haze Measurement of Sheet]

In accordance with JIS K 7136:2000, the haze of the sheet was measured using a haze meter (HM-150, manufactured by Murakami Color Research Laboratory Co., Ltd.).

[Tensile Properties of Sheet]

In accordance with JIS P 8113:2006, a tensile tester TENSILON (manufactured by A&D Company, Limited) was used to measure the tensile elastic modulus, the tensile strength, and the tensile elongation. In the measurement, humidity was controlled at 23°C and 50% RH for 24 hours, and then used as a test piece. The tensile elastic modulus is a value calculated from the maximum positive slope in the SS curve.

[Measurement of Yellowness of Sheet before and after Heating]

The yellowness (YI) of the sheet before and after heating was measured using Colour Cute i (manufactured by Suga Test Instruments Co., Ltd.) in accordance with JIS K 7373:2006. The YI after heating was the YI of the sheet heated at 160°C for 6 hours. In addition, the YI change (ΔYI) before and after heating was calculated by the following method.

YI change (ΔYI) before and after heating = (yellowness of sheet after heating) - (yellowness of sheet before heating)

[Sheet Appearance]

In addition, the sheet appearance was evaluated from the YI before and after heating according to the following criteria.

A: YI change (ΔYI) before and after heating is less than 1.5
B: YI change (ΔYI) before and after heating is 1.5 or more and less than 5.0
C: YI change (ΔYI) before and after heating is 5.0 or more

[Formability of Sheet]

The sheet was cut into a test piece of 5 cm × 5 cm, and the test piece was conditioned at 23°C and 50% RH for 24 hours. As shown in Fig. 3, the test piece was bent until θ became 0°, and evaluated according to the following criteria.

A: The sheet does not crack when bent.
B: The sheet cracks when bent.

Table 1-1

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |

(continued)

| | | | Example | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| Mix proportion (CNF layer) | Ultrafine fibrous cellulose (A) | [parts by mass] | 70 | 70 | 70 | 70 | 70 | 50 | 30 | 10 | 70 | 50 | | |
| | Ultrafine fibrous cellulose (B) | [parts by mass] | | | | | | | | | | | 70 | 50 |
| | Ultrafine fibrous cellulose (C) | [parts by mass] | | | | | | | | | | | | |
| | Ultrafine fibrous cellulose (D) | [parts by mass] | | | | | | | | | | | | |
| | Ultrafine fibrous cellulose (E) | [parts by mass] | | | | | | | | | | | | |
| | Cellulose ether (A) | [parts by mass] | 30 | | | | | | | | | | | |
| | Cellulose ether (B) | [parts by mass] | | 30 | | | | | | | | | | |
| | Cellulose ether (C) | [parts by mass] | | | | | | | | | | | | |
| | Cellulose ether (D) | [parts by mass] | | | 30 | | | | | | | | | |
| | Cellulose ether (E) | [parts by mass] | | | | 30 | | | | | | | | |
| | Cellulose ether (F) | [parts by mass] | | | | | 30 | 50 | 70 | 90 | 30 | 50 | 30 | 50 |
| | Cellulose ether (G) | [parts by mass] | | | | | | | | | | | | |
| | Polyvinyl alcohol (A) | [parts by mass] | | | | | | | | | | | | |
| | Polyvinyl alcohol (B) | [parts by mass] | | | | | | | | | | | | |
| | Polyethylene oxide | [parts by mass] | | | | | | | | | | | | |

(continued)

| | | | | Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Mix proportion (Resin layer) | Polycarbonate resin | | [parts by mass] | | | | | | | | | | | | |
| | Isocyanate compound | | [parts by mass] | | | | | | | | | | | | |
| Evaluation | Basis weight | | [g/m$^2$] | 32 | 32 | 32 | 32 | 32 | 32 | 32 | 32 | 180 | 180 | 32 | 32 |
| | Thickness | | [μm] | 25 | 25 | 25 | 25 | 25 | 25 | 25 | 25 | 150 | 150 | 25 | 25 |
| | Optical properties | YI before heating | [-] | 0.4 | 0.4 | 0.3 | 0.4 | 0.4 | 0.4 | 0.4 | 0.3 | 0.5 | 0.5 | 0.4 | 0.4 |
| | | YI after heating | [-] | 1.4 | 0.9 | 0.6 | 0.8 | 0.8 | 1.4 | 1.2 | 0.8 | 1.4 | 1.3 | 4.3 | 4.5 |
| | | ΔYI | [-] | 1.0 | 0.5 | 0.3 | 0.4 | 0.4 | 1.0 | 0.8 | 0.5 | 0.9 | 0.8 | 3.9 | 4.1 |
| | | Haze | [%] | 1.5 | 1.4 | 1.4 | 1.6 | 1.5 | 1.2 | 1.2 | 1.2 | 1.2 | 1.1 | 1.2 | 1.2 |
| | | Total luminous transmittance | [%] | 91.8 | 91.6 | 91.7 | 91.6 | 91.6 | 91.5 | 92.4 | 91.9 | 90.0 | 90.1 | 91.0 | 91.2 |
| | Mechanical properties | Tensile elastic modulus | [GPa] | 8.6 | 8.4 | 8.5 | 8.4 | 8.9 | 8.4 | 6.0 | 4.2 | 8.6 | 8.4 | 8.4 | 8.3 |
| | | Tensile strength | [MPa] | 97 | 103 | 94 | 97 | 120 | 130 | 110 | 104 | 133 | 140 | 91 | 90 |
| | | Tensile elongation | [%] | 8.1 | 7.8 | 8.9 | 9.4 | 7.0 | 15.0 | 23.8 | 31.7 | 17.0 | 17.4 | 5.1 | 5.2 |
| | Appearance | | [-] | A | A | A | A | A | A | A | A | A | A | B | B |
| | Formability | | [-] | A | A | A | A | A | A | A | A | A | A | A | A |

Table 1-2

| | | | Example | | | | Comparative Example | | | | | |
|---|---|---|---|---|---|---|---|---|---|---|---|---|
| | | | 13 | 14 | 15 | 16 | 1 | 2 | 3 | 4 | 5 | 6 |
| Mix proportion (CNF layer) | Ultrafine fibrous cellulose (A) | [parts by mass] | | | | 70 | 70 | 70 | 70 | 70 | 70 | |
| | Ultrafine fibrous cellulose (B) | [parts by mass] | | | | | | | | | | 70 |
| | Ultrafine fibrous cellulose (C) | [parts by mass] | 70 | | | | | | | | | |
| | Ultrafine fibrous cellulose (D) | [parts by mass] | | 70 | | | | | | | | |
| | Ultrafine fibrous cellulose (E) | [parts by mass] | | | 70 | | | | | | | |
| | Cellulose ether (A) | [parts by mass] | | | | | | | | | | |
| | Cellulose ether (B) | [parts by mass] | | | | | | | | | | |
| | Cellulose ether (C) | [parts by mass] | | | | | 30 | | | | | |
| | Cellulose ether (D) | [parts by mass] | | | | | | | | | | |
| | Cellulose ether (E) | [parts by mass] | | | | | | | | | | |

(continued)

| | | | Example | | | | Comparative Example | | | | | |
|---|---|---|---|---|---|---|---|---|---|---|---|---|
| | | | 13 | 14 | 15 | 16 | 1 | 2 | 3 | 4 | 5 | 6 |
| | Cellulose ether (F) | [parts by mass] | 30 | 30 | 30 | 30 | | | | | | |
| | Cellulose ether (G) | [parts by mass] | | | | | | 30 | | | | |
| | Polyvinyl alcohol (A) | [parts by mass] | | | | | | | 30 | | | |
| | Polyvinyl alcohol (B) | [parts by mass] | | | | | | | | 30 | | 30 |
| | Polyethylene oxide | [parts by mass] | | | | | | | | | 30 | |
| Mix proportion (Resin layer) | Polycarbonate resin | [parts by mass] | | | | 85 | | | | | | |
| | Isocyanate compound | [parts by mass] | | | | 15 | | | | | | |

(continued)

| | | | | Example | | | | Comparative Example | | | | | |
|---|---|---|---|---|---|---|---|---|---|---|---|---|---|
| | | | | 13 | 14 | 15 | 16 | 1 | 2 | 3 | 4 | 5 | 6 |
| Evaluation | Basis weight | | [g/m$^2$] | 32 | 32 | 32 | 186 | Sheet with uniform thickness could not be formed due to gelation | Sheet with uniform thickness could not be formed due to gelation | 32 | 32 | 32 | 32 |
| | Thickness | | [μm] | 25 | 25 | 25 | 156 | | | 25 | 25 | 25 | 25 |
| | Optical properties | YI before heating | [-] | 0.4 | 0.4 | 0.5 | 0.5 | | | 0.3 | 0.3 | 0.3 | 0.3 |
| | | YI after heating | [-] | 4.3 | 4.5 | 4.6 | 1.3 | | | 2.0 | 6.3 | 6.2 | 8.5 |
| | | ΔYI | [-] | 3.9 | 4.1 | 4.1 | 0.8 | | | 1.7 | 6.0 | 5.9 | 8.2 |
| | | Haze | [%] | 1.4 | 1.5 | 1.6 | 1.0 | | | 1.5 | 1.3 | 1.2 | 1.1 |
| | | Total luminous transmittance | [%] | 90.5 | 90.3 | 90.5 | 90.0 | | | 91.7 | 91.6 | 91.3 | 91.7 |
| | Mechanical properties | Tensile elastic modulus | [GPa] | 8.3 | 8.1 | 8.2 | 8.5 | | | 8.3 | 8.0 | 8.2 | 8.5 |
| | | Tensile strength | [MPa] | 90 | 90 | 91 | 129 | | | 88 | 85 | 85 | 86 |
| | | Tensile elongation | [%] | 4.9 | 5.0 | 5.2 | 17.5 | | | 2.0 | 1.8 | 2.5 | 2.7 |
| | Appearance | | [-] | B | B | B | A | - | - | B | C | C | C |
| | Formability | | [-] | A | A | A | A | - | - | B | B | B | B |

The sheets obtained in Examples 1 to 16 had low haze, high total luminous transmittance, and excellent transparency. In addition, the YI value before heating was low, and an increase in YI due to heating was also suppressed. Furthermore, the tensile elastic modulus and the tensile strength were high, the rigidity was excellent, the tensile elongation was high, and the flexibility was excellent.

On the other hand, in Comparative Examples 1 and 2 in which the weight-average molecular weight of the cellulose derivative exceeded $3.0 \times 10^5$, gelation occurred, and a sheet having a uniform thickness could not be formed. In addition, in Comparative Examples 3 to 6 in which polyvinyl alcohol or polyethylene oxide was used instead of the cellulose derivative, the increase in YI due to heating was greater than that in the case of using the cellulose derivative. Furthermore, the tensile elongation was small, cracking occurred in the sheet when bent, and the formability was poor.

## Claims

**1.** A sheet comprising:

ultrafine fibrous cellulose having a fiber width of 10 nm or less; and
a cellulose derivative having a weight-average molecular weight of $1.0 \times 10^4$ or more and $3.0 \times 10^5$ or less.

**2.** The sheet according to claim 1, wherein the ultrafine fibrous cellulose has an anionic group.

**3.** The sheet according to claim 1 or 2, wherein the ultrafine fibrous cellulose has a phosphorus oxo acid group or a group derived from the phosphorus oxo acid group.

**4.** The sheet according to any one of claims 1 to 3, wherein an amount of an anionic group in the ultrafine fibrous cellulose is less than 0.50 mmol/g.

**5.** The sheet according to claim 2 or 3, wherein the amount of the anionic group in the ultrafine fibrous cellulose is 0.80 mmol/g or more.

**6.** The sheet according to any one of claims 1 to 5, wherein the ultrafine fibrous cellulose contains a carbamide group.

**7.** The sheet according to any one of claims 1 to 6, wherein the cellulose derivative is a water-soluble cellulose ether.

**8.** The sheet according to claim 7, wherein the water-soluble cellulose ether is non-ionic.

**9.** The sheet according to claim 7 or 8, wherein the water-soluble cellulose ether has at least one functional group selected from the group consisting of a methoxy group and a hydroxypropoxy group.

**10.** The sheet according to any one of claims 7 to 9, wherein the water-soluble cellulose ether is selected from the group consisting of methyl cellulose and hydroxypropylmethyl cellulose.

**11.** The sheet according to any one of claims 1 to 10, wherein a total content of the ultrafine fibrous cellulose and the cellulose derivative is 90% by mass or more of a solid content of the sheet.

**12.** The sheet according to any one of claims 1 to 11, wherein a content of the ultrafine fibrous cellulose is 50% by mass or more of the solid content of the sheet.

**13.** The sheet according to any one of claims 1 to 12, wherein a change in a yellow index (YI value) before and after heating the sheet at 160°C for 6 hours is 1.5 or less.

**14.** The sheet according to any one of claims 1 to 13, wherein the sheet has a haze of 5% or less.

**15.** The sheet according to any one of claims 1 to 14, wherein the sheet has a total luminous transmittance of 90% or more.

**16.** The sheet according to any one of claims 1 to 15, wherein a tensile elastic modulus of the sheet is 6.5 GPa or more.

**17.** The sheet according to any one of claims 1 to 16, wherein a tensile elongation of the sheet is 3% or more.

**18.** A layered body comprising: the sheet according to any one of claims 1 to 17; and a resin layer on at least one surface of the sheet.

**19.** The sheet according to any one of claims 1 to 17, which is used for an optical member.

**20.** The sheet according to any one of claims 1 to 17, which is used for a foodstuff container, a cutlery, or a straw.

[Fig. 1]

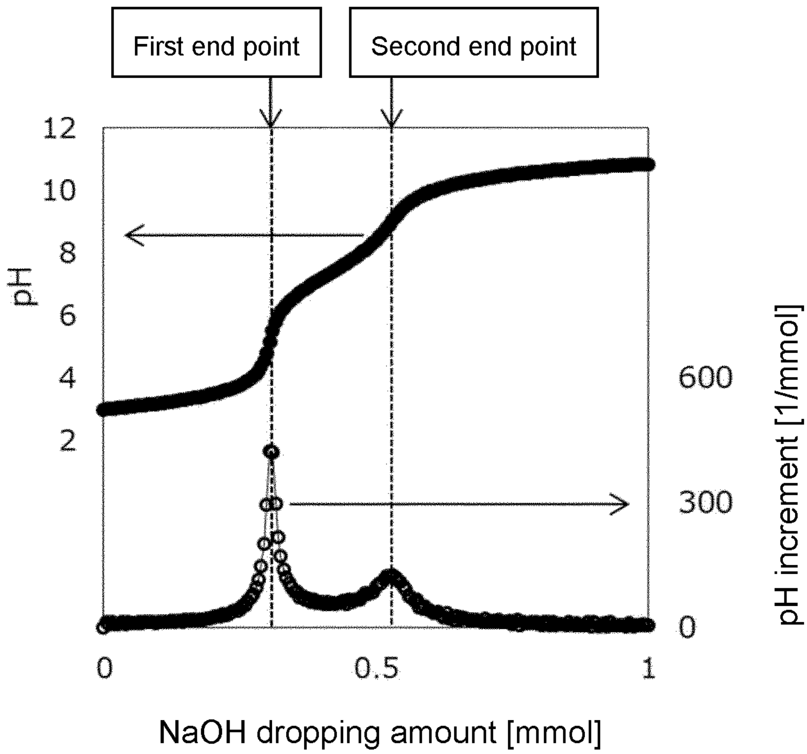
First end point
Second end point
pH
12
10
8
6
4
2
600
300
0
pH increment [1/mmol]
0
0.5
1
NaOH dropping amount [mmol]

[Fig. 2]

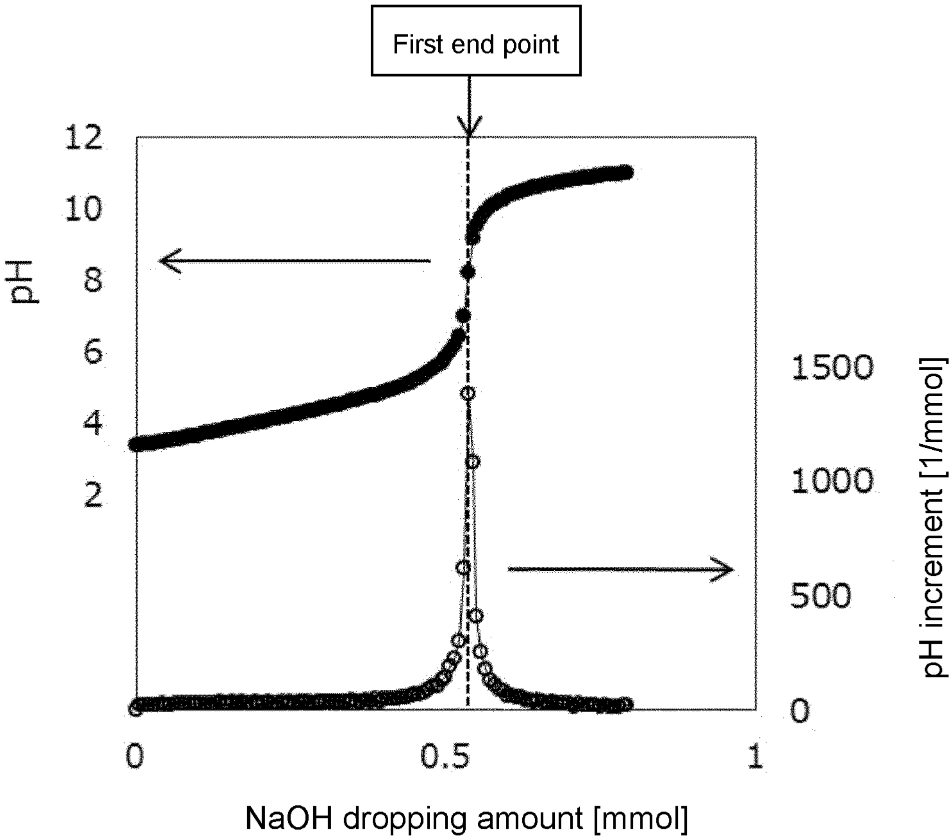
First end point
12
10
8
6
4
2
pH
1500
1000
500
0
pH increment [1/mmol]
0
0.5
1
NaOH dropping amount [mmol]

[Fig. 3]

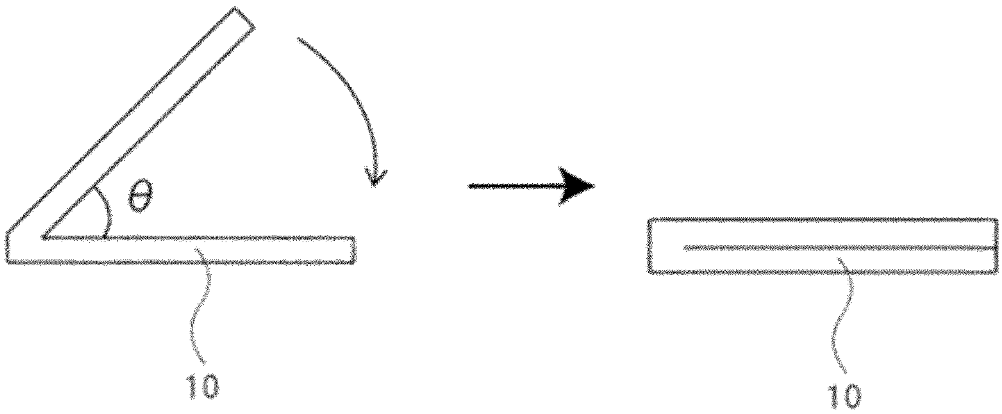
θ
10
10

**INTERNATIONAL SEARCH REPORT**

International application No. **PCT/JP2022/004145**

**A. CLASSIFICATION OF SUBJECT MATTER**

***C08J 5/18***(2006.01)i; ***B82Y 30/00***(2011.01)i; ***C08B 11/02***(2006.01)i; ***D21H 11/18***(2006.01)i
FI: C08J5/18; B82Y30/00; C08B11/02; D21H11/18

According to International Patent Classification (IPC) or to both national classification and IPC

**B. FIELDS SEARCHED**

Minimum documentation searched (classification system followed by classification symbols)

C08J5/18; B82Y30/00; C08B11/02; D21H11/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/143149 A1 (KATAYAMA CHEMICAL, INC.) 09 August 2018 (2018-08-09) paragraphs [0041]-[0045], examples | 1-3, 5-7, 11, 12 |
| A | paragraphs [0041]-[0045], examples | 4, 8-10, 13-20 |
| A | JP 2020-165062 A (OJI HOLDINGS CORP.) 08 October 2020 (2020-10-08) entire text, all drawings | 1-20 |
| A | JP 2018-533499 A (TETRA LAVAL HOLDINGS & FINANCE S. A.) 15 November 2018 (2018-11-15) entire text, all drawings | 1-20 |
| A | JP 2020-172035 A (OJI HOLDINGS CORP.) 22 October 2020 (2020-10-22) entire text, all drawings | 1-20 |
| A | JP 2018-199891 A (DAIO PAPER CORP.) 20 December 2018 (2018-12-20) entire text | 1-20 |
| E, A | JP 2022-26834 A (OJI HOLDINGS CORP.) 10 February 2022 (2022-02-10) entire text | 1-20 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/004145**

| Patent document cited in search report | Publication date (day/month/year) | Patent family member(s) | Publication date (day/month/year) |
|---|---|---|---|
| WO 2018/143149 A1 | 09 August 2018 | (Family: none) | |
| JP 2020-165062 A | 08 October 2020 | (Family: none) | |
| JP 2018-533499 A | 15 November 2018 | US 2018/0319143 A1<br>entire text, all drawings<br>WO 2017/072124 A1<br>EP 3368306 A1<br>CN 108472937 A<br>BR 112018003571 A | |
| JP 2020-172035 A | 22 October 2020 | (Family: none) | |
| JP 2018-199891 A | 20 December 2018 | (Family: none) | |
| JP 2022-26834 A | 10 February 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019108488 A
- JP 2011144363 A
- JP 2017052840 A
- JP 2017052940 A
- JP 2010023275 A

### Non-patent literature cited in the description

- **SEAGAL et al.** *Textile Research Journal,* 1959, vol. 29, 786